# EUROPEAN PATENT SPECIFICATION

(11) **EP 4 275 993 B1**
(45) Date of publication and mention of the grant of the patent: **11.03.2026**
(21) Application number: 21918216.9
(22) Date of filing: 13.01.2021
(51) Int. Cl.: B62D 5/04, B62D 3/00, B62D 15/00, B62D 5/00

(54) **STEER-BY-WIRE INDEPENDENT STEERING MECHANISM HAVING REDUNDANCY FUNCTION AND CONTROL METHOD**
STEER-BY-WIRE-UNABHÄNGIGER LENKMECHANISMUS MIT REDUNDANZFUNKTION UND STEUERUNGSVERFAHREN
MÉCANISME DE DIRECTION INDÉPENDANT DU TYPE À DIRECTION À COMMANDE ÉLECTRIQUE AYANT UNE FONCTION DE REDONDANCE ET PROCÉDÉ DE COMMANDE

(43) Date of publication of application: 15.11.2023
(73) Proprietor: Shenzhen Yinwang Intelligent Technologies Co., Ltd., Shenzhen, Guangdong 518129 (CN)
(72) Inventor: WANG, Hui, Shenzhen, Guangdong 518129 (CN); REN, Sijia, Shenzhen, Guangdong 518129 (CN); SUN, Jian, Shenzhen, Guangdong 518129 (CN)
(74) Representative: Maiwald GmbH
(86) International application number: PCT/CN2021/071361
(87) International publication number: WO 2022/150998

(56) References cited:
- EP-A1- 4 140 857
- CN-A- 108 248 676
- CN-A- 108 248 676
- CN-A- 110 696 912
- CN-U- 206 012 708
- CN-U- 208 360 287
- DE-A1- 102019 206 671
- JP-A- 2013 107 473
- US-A1- 2020 307 678
- "STEERING LOSS OF CONTROL LIMITER", RESEARCH DISCLOSURE, KENNETH MASON PUBLICATIONS, HAMPSHIRE, UK, GB, no. 411, 1 July 1998 (1998-07-01), pages 845, XP000824766, ISSN: 0374-4353

## Description

### TECHNICAL FIELD

This application relates to a vehicle steer-by-wire steering system, and in particular, to a steer-by-wire steering mechanism with a redundancy function and a control method.

### BACKGROUND

With the development of intelligent vehicles, a steer-by-wire steering technology is promoted. However, a conventional steering mechanism is still used in some existing steering systems. As a result, a control domain of a horizontal motion of a vehicle in a self-driving system or an assisted driving system is limited, and an advantage of an intelligent driving system is difficult to be fully utilized.

In a conventional steering mechanism used for existing steer-by-wire steering, angles of left and right wheels are coupled with each other, which has many disadvantages. During vehicle steering, an angle relationship between inner and outer wheels is determined by a steering trapezoid parameter. A conventional steering system cannot be adaptively adjusted based on current actual operating conditions of a vehicle, such as load of the vehicle, tire pressure, and a vehicle speed, thereby aggravating tire wear during actual operation of the vehicle. In the conventional steering system, the inner and outer wheels are coupled with each other in a mechanical structure, and cannot be independently controlled and adjusted based on control objectives such as stability, maneuverability, and active safety, resulting in a small controllable domain. Therefore, it is increasingly difficult to meet control requirements of the current vehicle on electrification and intelligence. A geometric relationship between a front wheel toe and a camber angle is fixed, and it is difficult to reconcile a contradiction between tire wear and vehicle operation stability. The CN110696912A refers to a multi-mode motor-driven steer-by-wire system of passenger vehicle and a steering control method thereof. The publication by Research disclosure, Kenneth Mason Publications, Hampshire, UK, GB, no. 411, 1 July 1998 (1998-07-01), page 845, XP000824766, ISSN: 0374-4353, refers to a "Steering Loss of Control Limiter".

In conclusion, a steering system that can provide a wheel with a larger control domain for independent control has become a major trend of future development of steering systems in passenger vehicles and commercial vehicles. However, in many independent steering technologies, a motor is used to directly drive steering, or a hydraulic system is used to drive steering, which is complex in a structure. In addition, because the inner and outer wheels are completely mechanically decoupled, after a control system fails, the vehicle is completely out of control, and it is difficult to meet a functional safety requirement.

### SUMMARY

This application provides a novel steering mechanism. Compared with a conventional steering mechanism, left and right wheels in the provided mechanism may be switched to a coupling state or a decoupling state according to a requirement, to provide a larger control domain for an electrically controlled system, thereby meeting increasing control requirements of a current vehicle on electrification and intelligence. The invention is set out in the appended set of claims.

### BRIEF DESCRIPTION OF DRAWINGS

FIG. 1 is a schematic functional diagram of a vehicle according to an embodiment of this application;
FIG. 2 is a schematic diagram of a principle of a coupling apparatus according to an embodiment of this application;
FIG. 3 is a schematic diagram of a principle of another coupling apparatus according to an embodiment of this application;
FIG. 4 is a schematic diagram of a principle of another coupling apparatus according to an embodiment of this application;
FIG. 5 is a schematic diagram of a principle of another coupling apparatus according to an embodiment of this application;
FIG. 6 is a schematic diagram of an independent steer-by-wire steering mechanism with a redundancy function according to an embodiment of this application;
FIG. 7 is a schematic diagram of another independent steer-by-wire steering mechanism with a redundancy function according to an embodiment of this application;
FIG. 8 shows a steer-by-wire steering mode according to an embodiment of this application;
FIG. 9 shows another steer-by-wire steering mode according to an embodiment of this application;
FIG. 10 shows another steer-by-wire steering mode according to an embodiment of this application;
FIG. 11 shows another steer-by-wire steering mode according to an embodiment of this application;
FIG. 12 shows another mechanical steering mode according to an embodiment of this application;
FIG. 13 shows another mechanical steering mode according to an embodiment of this application;
FIG. 14 shows another mechanical steering mode according to an embodiment of this application;
FIG. 15 shows another mechanical steering mode according to an embodiment of this application;
FIG. 16 shows another mechanical steering mode according to an embodiment of this application; and
FIG. 17 shows another mechanical steering mode according to an embodiment of this application;

### DESCRIPTION OF EMBODIMENTS

The following describes embodiments of this application with reference to the accompanying drawings. It is clear that the described embodiments are merely some rather than all of embodiments of this application. A person of ordinary skill in the art may learn that, with technology development and emergence of a new scenario, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that embodiments described herein can be implemented in other orders than the order illustrated or described herein. In addition, the terms "include", "contain" and any other variants mean to cover the non-exclusive inclusion, for example, a process, method, system, product, or device that includes a list of steps or modules is not necessarily limited to those steps or modules, but may include other steps or modules not expressly listed or inherent to such a process, method, system, product, or device. Naming or numbering of steps in this application does not mean that the steps in the method procedures need to be performed in a time/logical order indicated by the naming or numbering. An execution order of the steps in the procedures that have been named or numbered can be changed based on a technical objective to be achieved, as long as same or similar technical effects can be achieved. Division into the modules in this application is logical division. In actual application, there may be another division manner. For example, a plurality of modules may be combined or integrated into another system, or some features may be ignored or not performed. In addition, the displayed or discussed mutual coupling or direct coupling or communication connection may be through some ports, and the indirect coupling or communication connection between modules may be in an electrical form or another similar form. This is not limited in this application. In addition, modules or sub-modules described as separate components may be or may not be physically separated, or may be or may not be physical modules, or may be distributed to a plurality of circuit modules. Some or all of the modules may be selected according to an actual requirement to implement the objectives of the solutions of this application.

In this application, unless otherwise specified and limited, the terms such as "mount", "link", "connect", "fasten", and "dispose" should be understood broadly. For example, the term "connect" may be a fixed connection, may be a detachable connection, or may be integration; may be a mechanical connection or may be an electrical connection; or may be a direct connection, may be an indirect connection implemented by using an intermediate medium, or may be communication inside two elements or an interaction relationship between two elements. A person of ordinary skill in the art may interpret specific meanings of the foregoing terms in this application according to specific cases.

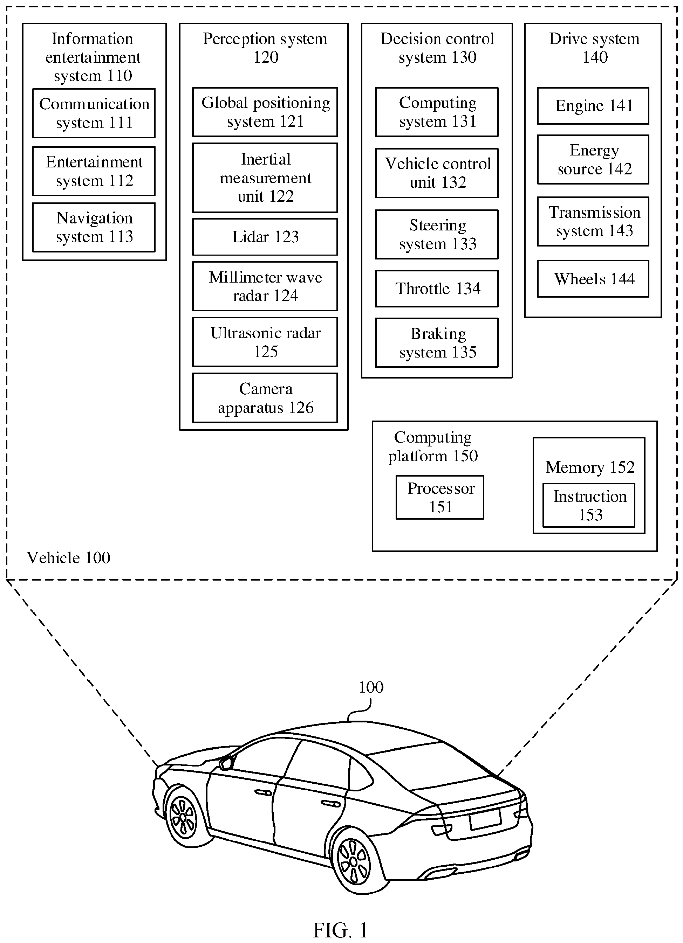

Vehicles are developing and innovating in the tide of electrification, network connectivity, intelligence, and sharing. FIG. 1 is a schematic functional diagram of a vehicle 100 according to an embodiment of this application. The vehicle 100 may be configured to be in a full or partial self-driving mode. For example, the vehicle 100 may obtain surrounding environment information of the vehicle 100 by using a perception system 120, and obtain a self-driving policy based on an analysis of the surrounding environment information, to implement full self-driving, or present an analysis result to a user, to implement partial self-driving.

The vehicle 100 may include various subsystems, such as an information entertainment system 110, the perception system 120, a decision control system 130, a drive system 140, and a computing platform 150. Optionally, the vehicle 100 may include more or fewer subsystems, and each subsystem may include a plurality of components. In addition, each subsystem and component of the vehicle 100 may be connected to each other in a wired or wireless manner.

A steering system 133 may be operated to adjust an advancing direction of the vehicle 100. For example, in an embodiment, the steering system 133 may be a steering wheel system.

A throttle 134 is configured to control an operating speed of an engine 141 and further control a speed of the vehicle 100.

A braking system 135 is configured to control the vehicle 100 to decelerate. The braking system 135 may slow down wheels 144 by using friction force. In some embodiments, the braking system 135 may convert kinetic energy of the wheels 144 into a current. The braking system 135 may alternatively reduce a rotation speed of the wheels 144 in another manner, to control the speed of the vehicle 100.

The drive system 140 may include a component that provides power for the vehicle 100 to move. In an embodiment, the drive system 140 may include the engine 141, an energy source 142, a transmission system 143, and the wheels 144. The engine 141 may be a combination of an internal combustion engine, a motor, an air compression engine, or another type of engine, for example, a hybrid engine including a gasoline engine and a motor, or a hybrid engine including an internal combustion engine and an air compression engine. The engine 141 converts the energy source 142 into mechanical energy.

For example, the energy source 142 includes gasoline, diesel, other oil-based fuels, propane, other compressed gas-based fuels, ethanol, solar panels, batteries, or other power sources. The energy source 142 may also provide energy to another system of the vehicle 100.

The transmission apparatus 143 may transmit mechanical power from the engine 141 to the wheels 144. The transmission apparatus 143 may include a gearbox, a differential, and a drive shaft. In an embodiment, the transmission apparatus 143 may further include another component, for example, a clutch. The drive shaft may include one or more shafts that may be coupled with one or more wheels 121.

Some or all functions of the vehicle 100 are controlled by the computing platform 150. The computing platform 150 may include at least one processor 151, and the processor 151 may execute an instruction 153 stored in a non-transitory computer-readable medium, for example, a memory 152. In some embodiments, the computing platform 150 may alternatively be a plurality of computing devices that control an individual component or a subsystem of the vehicle 100 in a distributed manner.

The processor 151 may be any conventional processor, for example, a central processing unit (central process unit, CPU). Alternatively, the processor 151 may further include a graphics processing unit (graphic process unit, GPU), a field-programmable gate array (fieldprogrammable gate array, FPGA), a system-on-chip (systemonchip, SOC), an applicationspecific integrated chip (applicationspecific integrated circuit, ASIC), or a combination thereof. Although FIG. 1 functionally illustrates the processor, the memory, and other elements of the computer 110 in a same block, a person of ordinary skill in the art should understand that the processor, the computer, or the memory may actually include a plurality of processors, computers, or memories that may or may not be stored in a same physical housing. For example, the memory may be a hard disk drive, or another storage medium located in a housing different from that of the computer 110. Therefore, a reference to the processor or the computer is understood as including a reference to a set of processors or computers or memories that may or may not operate in parallel. Different from using a single processor to perform the steps described herein, for example, some components such as a steering component and a deceleration component may include respective processors, the processor performs only computation related to a component-specific function.

In various aspects described herein, the processor may be located far away from the vehicle and perform wireless communication with the vehicle. In another aspect, some processes described herein are performed on a processor disposed inside the vehicle, while others are performed by a remote processor, including performing steps necessary for single manipulation.

In some embodiments, the memory 152 may include the instruction 153 (for example, program logic), and the instruction 153 may be executed by the processor 151 to perform various functions of the vehicle 100. The memory 152 may also include extra instructions, including instructions used to send data to, receive data from, interact with, and/or perform control on one or more of the information entertainment system 110, the perception system 120, the decision control system 130, and the drive system 140.

In addition to the instruction 153, the memory 152 may further store data, for example, a road map, route information, and a location, a direction, a speed, and other vehicle data of the vehicle, and other information. Such information may be used by the vehicle 100 and the computing platform 150 during operation of the vehicle 100 in an autonomous mode, a semi-autonomous mode, and/or a manual mode.

The computing platform 150 may control a function of the vehicle 100 based on inputs received from various subsystems (for example, the drive system 140, the perception system 120, and the decision control system 130). For example, the computing platform 150 may utilize an input from the decision control system 130 to control the steering system 133 to avoid an obstacle detected by the perception system 120. In some embodiments, the computing platform 150 is operated to provide control on many aspects of the vehicle 100 and the subsystems of the vehicle.

Optionally, one or more of the foregoing components may be installed separately from or associated with the vehicle 100. For example, the memory 152 may exist partially or completely separate from the vehicle 100. The foregoing components may be communicatively coupled with each other in a wired and/or wireless manner.

Optionally, the foregoing components are merely examples. During actual application, components in the foregoing modules may be added or removed based on an actual requirement. FIG. 1 should not be construed as a limitation on this embodiment of this application.

The vehicle 100 may be a car, a truck, a motorcycle, a bus, a boat, an airplane, a helicopter, a lawn mower, a recreational vehicle, a playground vehicle, a construction device, a trolley, a golf cart, a train, or the like. This is not specifically limited in embodiments of this application.

With reference to the foregoing description, an embodiment of this application provides an independent steer-by-wire steering mechanism with a redundancy function, which may be used in the vehicle 100 shown in FIG. 1. The embodiments of this application mainly describe the steer-by-wire steering mechanism with a redundancy function provided in this application from the following aspects.

The steering mechanism provided in an embodiment of this application includes a coupling apparatus.

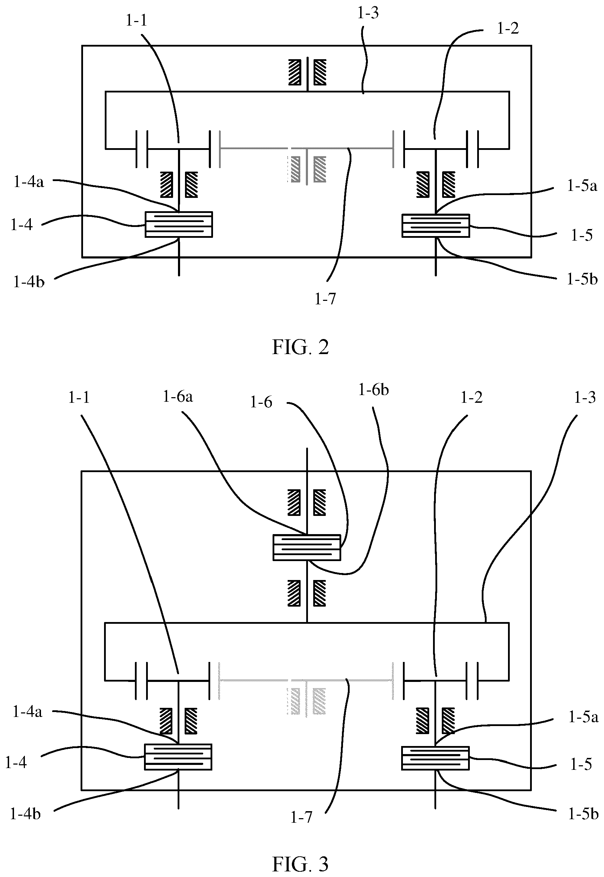

FIG. 2 is a schematic diagram of a coupling apparatus according to an embodiment of this application. As shown in FIG. 2, the coupling apparatus includes a first gear 1-1, a second gear 1-2, a third gear 1-3, a first electrically controlled clutch 1-4, and a second electrically controlled clutch 1-5. The third gear is a ring gear 1-3. The ring gear is internally engaged with the first gear 1-1. The ring gear is internally engaged with the second gear 1-2. The first gear 1-1 is coupled with the second gear 1-2 through the ring gear 1-3. The first electrically controlled clutch 1-4 includes a first input end 1-4a and a first output end 1-4b. The first gear 1-1 is connected to the first input end 1-4a of the first electrically controlled clutch 1-4. The second electrically controlled clutch 1-5 includes a second input end 1-5a and a second output end 1-5b. The second gear 1-2 is connected to the second input end 1-5a of the second electrically controlled clutch 1-5.

The first electrically controlled clutch 1-4 includes a first working state and a second working state. When the first electrically controlled clutch 1-4 is in the first working state, the first output end 1-4b of the first electrically controlled clutch 1-4 is coupled with the first input end 1-4a. When the first electrically controlled clutch 1-4 is in the second working state, the first output end 1-4b of the first electrically controlled clutch 1-4 is decoupled from the first input end 1-4a. In this way, coupling and decoupling states of the first output end 1-4b can be controlled.

The second electrically controlled clutch 1-5 includes a third working state and a fourth working state. When the second electrically controlled clutch 1-5 is in the third working state, the second output end 1-5b of the second electrically controlled clutch 1-5 is coupled with the second input end 1-5a. When the second electrically controlled clutch 1-5 is in the fourth working state, the second output end 1-5b of the second electrically controlled clutch 1-5 is decoupled from the second input end 1-5a. In this way, coupling and decoupling states of the second output end 1-5b can be controlled.

FIG. 3 is a schematic diagram of another coupling apparatus according to an embodiment of this application. As shown in FIG. 3, the coupling apparatus includes a first gear 1-1, a second gear 1-2, a third gear 1-3, a first electrically controlled clutch 1-4, a second electrically controlled clutch 1-5, and a third electrically controlled clutch 1-6. The third gear is a ring gear 1-3. The ring gear is internally engaged with the first gear 1-1. The ring gear is internally engaged with the second gear 1-2. The first gear 1-1 is coupled with the second gear 1-2 through the ring gear 1-3. The first electrically controlled clutch 1-4 includes a first input end 1-4a and a first output end 1-4b. The first gear 1-1 is connected to the first input end 1-4a of the first electrically controlled clutch 1-4. The second electrically controlled clutch 1-5 includes a second input end 1-5a and a second output end 1-5b. The second gear 1-2 is connected to the second input end 1-5a of the second electrically controlled clutch 1-5. The third electrically controlled clutch 1-6 includes a third input end 1-6a and a third output end 1-6b. The third gear 1-3 is connected to the third output end 1-6b of the third electrically controlled clutch 1-6.

The first electrically controlled clutch 1-4 includes a first working state and a second working state. When the first electrically controlled clutch 1-4 is in the first working state, the first output end 1-4b of the first electrically controlled clutch 1-4 is coupled with the first input end 1-4a. When the first electrically controlled clutch 1-4 is in the second working state, the first output end 1-4b of the first electrically controlled clutch 1-4 is decoupled from the first input end 1-4a. In this way, coupling and decoupling states of the first output end 1-4b can be controlled.

The second electrically controlled clutch 1-5 includes a third working state and a fourth working state. When the second electrically controlled clutch 1-5 is in the third working state, the second output end 1-5b of the second electrically controlled clutch 1-5 is coupled with the second input end 1-5a. When the second electrically controlled clutch 1-5 is in the fourth working state, the second output end 1-5b of the second electrically controlled clutch 1-5 is decoupled from the second input end 1-5a. In this way, coupling and decoupling states of the second output end 1-5b can be controlled.

The third electrically controlled clutch 1-6 includes a fifth working state and a sixth working state. When the third electrically controlled clutch 1-6 is in the fifth working state, the third output end 1-6b of the third electrically controlled clutch 1-6 is coupled with the third input end 1-6a. When the third electrically controlled clutch 1-6 is in the sixth working state, the third output end 1-6b of the third electrically controlled clutch 1-6 is decoupled from the third input end 1-6a. In this way, coupling and decoupling states of the third input end 1-6a can be controlled.

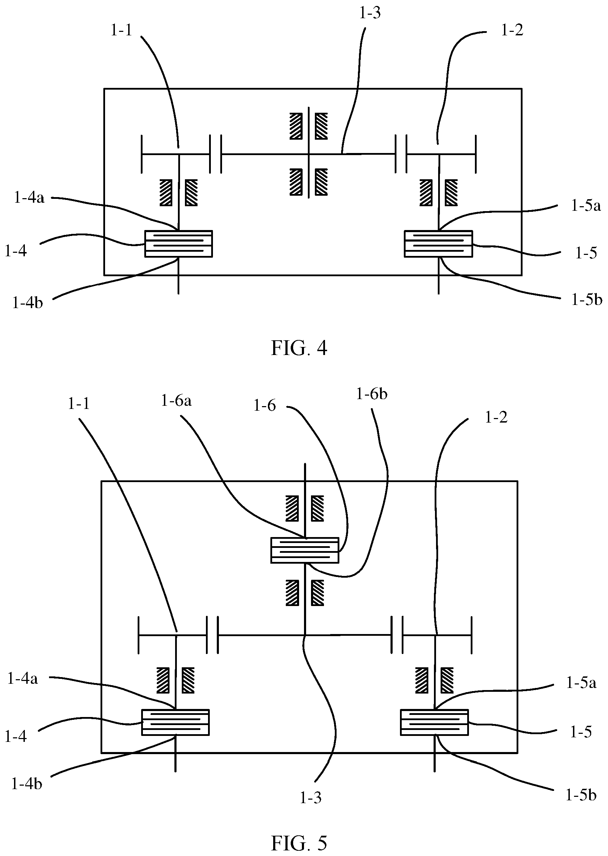

FIG. 4 is a schematic diagram of a coupling apparatus according to an embodiment of this application. As shown in FIG. 4, the coupling apparatus includes a first gear 1-1, a second gear 1-2, a third gear 1-3, a first electrically controlled clutch 1-4, and a second electrically controlled clutch 1-5. The third gear is an intermediate gear 1-3. The intermediate gear 1-3 is externally engaged with the first gear 1-1. The intermediate gear 1-3 is externally engaged with the second gear 1-2. The first gear 1-1 is coupled with the second gear 1-2 through the intermediate gear 1-3. The first electrically controlled clutch 1-4 includes a first input end 1-4a and a first output end 1-4b. The first gear 1-1 is connected to the first input end 1-4a of the first electrically controlled clutch 1-4. The second electrically controlled clutch 1-5 includes a second input end 1-5a and a second output end 1-5b. The second gear 1-2 is connected to the second input end 1-5a of the second electrically controlled clutch 1-5.

The first electrically controlled clutch 1-4 includes a first working state and a second working state. When the first electrically controlled clutch 1-4 is in the first working state, the first output end 1-4b of the first electrically controlled clutch 1-4 is coupled with the first input end 1-4a. When the first electrically controlled clutch 1-4 is in the second working state, the first output end 1-4b of the first electrically controlled clutch 1-4 is decoupled from the first input end 1-4a. In this way, coupling and decoupling states of the first output end 1-4b can be controlled.

The second electrically controlled clutch 1-5 includes a third working state and a fourth working state. When the second electrically controlled clutch 1-5 is in the third working state, the second output end 1-5b of the second electrically controlled clutch 1-5 is coupled with the second input end 1-5a. When the second electrically controlled clutch 1-5 is in the fourth working state, the second output end 1-5b of the second electrically controlled clutch 1-5 is decoupled from the second input end 1-5a. In this way, coupling and decoupling states of the second output end 1-5b can be controlled.

FIG. 5 is a schematic diagram of another coupling apparatus according to an embodiment of this application. As shown in FIG. 5, the coupling apparatus includes a first gear 1-1, a second gear 1-2, a third gear 1-3, a first electrically controlled clutch 1-4, a second electrically controlled clutch 1-5, and a third electrically controlled clutch 1-6. The third gear is an intermediate gear 1-3. The intermediate gear 1-3 is externally engaged with the first gear 1-1. The intermediate gear 1-3 is externally engaged with the second gear 1-2. The first gear 1-1 is coupled with the second gear 1-2 through the intermediate gear 1-3. The first electrically controlled clutch 1-4 includes a first input end 1-4a and a first output end 1-4b. The first gear 1-1 is connected to the first input end 1-4a of the first electrically controlled clutch 1-4. The second electrically controlled clutch 1-5 includes a second input end 1-5a and a second output end 1-5b. The second gear 1-2 is connected to the second input end 1-5a of the second electrically controlled clutch 1-5. The third electrically controlled clutch 1-6 includes a third input end 1-6a and a third output end 1-6b. The third gear 1-3 is connected to the third output end 1-6b of the third electrically controlled clutch 1-6.

The first electrically controlled clutch 1-4 includes a first working state and a second working state. When the first electrically controlled clutch 1-4 is in the first working state, the first output end 1-4b of the first electrically controlled clutch 1-4 is coupled with the first input end 1-4a. When the first electrically controlled clutch 1-4 is in the second working state, the first output end 1-4b of the first electrically controlled clutch 1-4 is decoupled from the first input end 1-4a. In this way, coupling and decoupling states of the first output end 1-4b can be controlled.

The second electrically controlled clutch 1-5 includes a third working state and a fourth working state. When the second electrically controlled clutch 1-5 is in the third working state, the second output end 1-5b of the second electrically controlled clutch 1-5 is coupled with the second input end 1-5a. When the second electrically controlled clutch 1-5 is in the fourth working state, the second output end 1-5b of the second electrically controlled clutch 1-5 is decoupled from the second input end 1-5a. In this way, coupling and decoupling states of the second output end 1-5b can be controlled.

The third electrically controlled clutch 1-6 includes a fifth working state and a sixth working state. When the third electrically controlled clutch 1-6 is in the fifth working state, the third output end 1-6b of the third electrically controlled clutch 1-6 is coupled with the third input end 1-6a. When the third electrically controlled clutch 1-6 is in the sixth working state, the third output end 1-6b of the third electrically controlled clutch 1-6 is decoupled from the third input end 1-6a. In this way, coupling and decoupling states of the third input end 1-6a can be controlled.

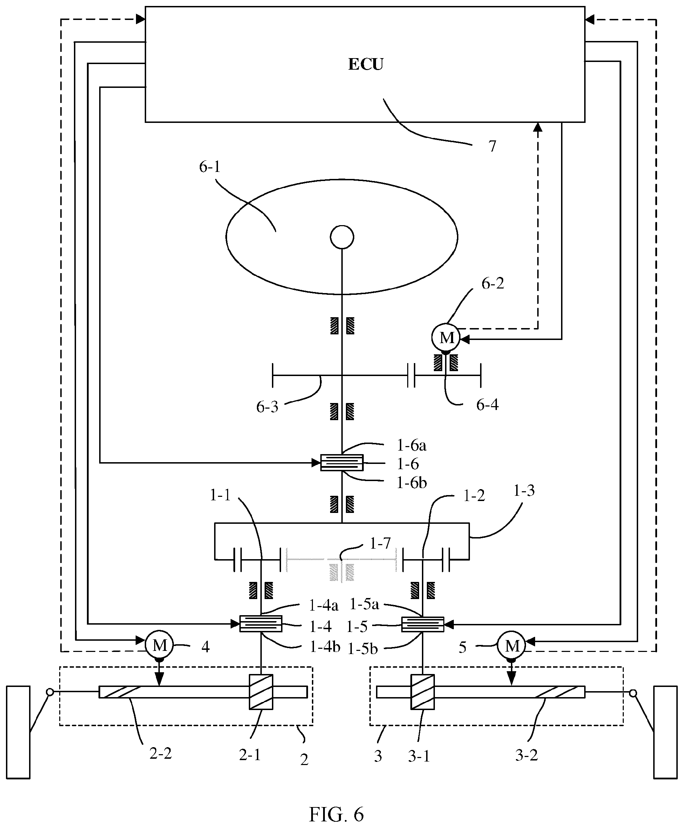

FIG. 6 is a schematic diagram of a possible implementation solution of a steering mechanism according to this application. As shown in FIG. 6, the steering mechanism mainly includes a coupler 1, a first steering device 2, and a second steering device 3. The first steering device 2 is connected to the coupler 1, and the second steering device 3 is connected to the coupler 1.

It should be noted herein that a specific connection form between the first steering device 2 and the coupler 1 and a specific connection form between the second steering device 3 and the coupler 1 are not limited. For example, the first steering device 2 may be coaxially connected to the coupler 1, and the first steering device 2 may alternatively be non-coaxially connected to the coupler 1. When the first steering device 2 and the coupler 1 cannot be set to be coaxially connected due to factors such as space arrangement, the first steering device 2 and the coupler 1 can be non-coaxially connected, for example, through gear transmission.

In a possible implementation, the coupler 1 is operated through gear transmission, and power coupling is implemented through gear system transmission of a shaft of the first gear 1-1, a shaft of the second gear 1-2, and the third gear 1-3.

Optionally, the steering coupler 1 includes the shaft of the first gear 1-1, the shaft of the second gear 1-2, and a ring gear 1-3. The shaft of the first gear 1-1 is connected to the first steering device 2, the shaft of the second gear 1-2 is connected to the second steering device 3, and the shaft of the first gear 1-1 is coupled with the shaft of the second gear 1-2 through the ring gear 1-3.

Optionally, the coupler 1 includes a first intermediate gear 1-7, and the first intermediate gear is separately engaged with a gear on the shaft of the first gear 1-1 and a gear on the shaft of the second gear 1-2, to stabilize transmission.

In a possible implementation, the first steering device 2 and the second steering device 3 are gear rack steering devices.

Optionally, the first steering device 2 includes a first steering gear 2-1 and a first rack 2-2. A first motor 4 is connected to the first rack 2-2, and the first rack 2-2 may perform a wheel steering action driven by the first motor 4. The first steering gear 2-1 is connected to the coupler 1 through a first electrically controlled clutch 1-4.

Optionally, the second steering device 3 includes a second steering gear 3-1 and a second rack 3-2. A second motor 5 is connected to the second rack 3-2, and the second rack 3-2 may perform a wheel steering action driven by the second motor 5. The second steering gear 3-1 is connected to the coupler 1 through a second electrically controlled clutch 1-5.

Optionally, when the first electrically controlled clutch 1-4 and the second electrically controlled clutch 1-5 are normally closed clutches, in a default condition, the first steering device 2 is coupled with the coupler 1 through the first electrically controlled clutch 1-4, and the second steering device 3 is coupled with the coupler 1 through the second electrically controlled clutch 1-5. When the first electrically controlled clutch 1-4 is controlled and switched to a disconnected state, the first steering device 2 is decoupled from the coupler 1; and when the second electrically controlled clutch 1-5 is controlled and switched to a disconnected state, the second steering device 3 is decoupled from the coupler 1.

In a possible implementation, the steering mechanism provided in this embodiment of this application further includes a steering input mechanism. The steering input mechanism provided in this embodiment of this application includes a steering wheel 6-1.

Optionally, the steering input mechanism provided in this embodiment of this application further includes a third motor 6-2.

Optionally, a gear shaft of the steering wheel 6-1 is engaged with an output shaft of the third motor 6-2 through a gear.

Optionally, the gear shaft of the steering wheel 6-1 is connected to the ring gear 1-3 of the coupler 1.

In a possible implementation, the steering mechanism provided in this embodiment of this application further includes a third electrically controlled clutch 1-6.

The steering input mechanism is connected to the coupler 1 through the third electrically controlled clutch 1-6. Optionally, the gear shaft of the steering wheel 6-1 is connected to the third electrically controlled clutch 1-6, and the third electrically controlled clutch 1-6 is connected to the ring gear 1-3 of the coupler 1.

When the third electrically controlled clutch 1-6 is in a closed state, power of the steering wheel 6-1 may be input to the coupler 1 through the third electrically controlled clutch 1-6; or when the third electrically controlled clutch 1-6 is in a disconnected state, power of the steering wheel 6-1 cannot be input to the coupler 1 through the third electrically controlled clutch 1-6.

As shown in FIG. 6, the first steering device 2 may be driven in a plurality of forms. The first steering device 2 may convert power input by the first motor 4 into a steering force that drives a left wheel to rotate. When the first electrically controlled clutch 1-4 is disconnected, the left wheel may be separately controlled by the first motor 4. When the first electrically controlled clutch 1-4 is closed, the first steering device 2 is coupled with the coupler 1, and the first steering device 2 may convert power input by the coupler 1 through the first electrically controlled clutch 1-4 into the steering force that drives the left wheel to rotate.

In a possible implementation, the power input by the coupler 1 to the first steering device 2 through the first electrically controlled clutch 1-4 may at least come from the second motor 5 or the steering wheel 6-1; and when the third motor 6-2 works in a steering-assisted mode, the power may also come from the third motor 6-2.

Optionally, a first source of the power input by the coupler 1 to the first steering device 2 through the first electrically controlled clutch 1-4 may be the second motor 5. When the first electrically controlled clutch 1-4 is closed and the second electrically controlled clutch 1-5 is also closed, the power input by the second motor 5 to the second steering device 3 may be input to the first steering device 2 through the second electrically controlled clutch 1-5, the coupler 1, and the first electrically controlled clutch 1-4, and the first steering device 2 converts the power into the steering force that drives the left wheel to rotate.

Optionally, a second source of the power input by the coupler 1 to the first steering device 2 through the first electrically controlled clutch 1-4 may be the steering wheel 6-1. When the first electrically controlled clutch 1-4 is closed and the third electrically controlled clutch 1-6 is also closed, the power input by the steering wheel 6-1 may be input to the first steering device 2 through the third electrically controlled clutch 1-6, the coupler 1, and the first electrically controlled clutch 1-4, and the first steering device 2 converts the power into the steering force that drives the left wheel to rotate.

Optionally, a third source of the power input by the coupler 1 to the first steering device 2 through the first electrically controlled clutch 1-4 may be the steering wheel 6-1 or the steering wheel 6-1 and the third motor 6-2. When the first electrically controlled clutch 1-4 is closed and the third electrically controlled clutch 1-6 is also closed, the power input by the steering wheel 6-1 separately or the power input by the steering wheel 6-1 and the third motor 6-2 may be input to the first steering device 2 through the third electrically controlled clutch 1-6, the coupler 1, and the first electrically controlled clutch 1-4, and the first steering device 2 converts the power into the steering force that drives the left wheel to rotate.

Therefore, in this embodiment provided in this application, the first steering device 2 may be independently driven by the first motor 4. In addition, when the first motor 4 is faulty and cannot drive the first steering device 2, the power input by the second motor 5, or input by the steering wheel 6-1, or input by both the steering wheel 6-1 and the third motor 6-2 can be used to drive the first steering device 2, to provide a redundancy backup function.

Similarly, the second steering device 3 may also be driven in a plurality of forms.

As shown in FIG. 6, the second steering device 3 may convert the power input by the second motor 5 into a steering force that drives a right wheel to rotate. When the second electrically controlled clutch 1-5 is disconnected, the right wheel may be separately controlled by the second motor 5.

When the second electrically controlled clutch 1-5 is closed, the second steering device 3 is coupled with the coupler 1, and the second steering device 3 may convert the power input by the coupler 1 through the second electrically controlled clutch 1-5 into the steering force that drives the right wheel to rotate.

The power input by the coupler 1 to the second steering device 3 through the second electrically controlled clutch 1-5 may at least come from the first motor 4 or the steering wheel 6-1; and when the third motor 6-2 works in a steering-assisted mode, the power may also come from the third motor 6-2.

Optionally, a first source of the power input by the coupler 1 to the second steering device 3 through the second electrically controlled clutch 1-5 may be the first motor 4. When the second electrically controlled clutch 1-5 is closed and the first electrically controlled clutch 1-4 is also closed, the power input by the first motor 4 to the second steering device 3 may be input to the second steering device 3 through the first electrically controlled clutch 1-4, the coupler 1, and the second electrically controlled clutch 1-5, and the second steering device 3 converts the power into the steering force that drives the right wheel to rotate.

Optionally, a second source of the power input by the coupler 1 to the second steering device 3 through the second electrically controlled clutch 1-5 may be the steering wheel 6-1. When the second electrically controlled clutch 1-5 is closed and the third electrically controlled clutch 1-6 is also closed, the power input by the steering wheel 6-1 may be input to the second steering device 3 through the third electrically controlled clutch 1-6, the coupler 1, and the second electrically controlled clutch 1-5, and the second steering device 3 converts the power into the steering force that drives the right wheel to rotate.

Optionally, a third source of power input by the coupler 1 to the second steering device 3 through the second electrically controlled clutch 1-5 may be the steering wheel 6-1 and the third motor 6-2. When the second electrically controlled clutch 1-5 is closed and the third electrically controlled clutch 1-6 is also closed, the power input by the steering wheel 6-1 and the third motor 6-2 may be input to the second steering device 3 through the third electrically controlled clutch 1-6, the coupler 1, and the second electrically controlled clutch 1-5, and the second steering device 3 converts the power into the steering force that drives the right wheel to rotate.

Therefore, in this embodiment provided in this application, the second steering device 3 may be independently driven by the second motor 5. In addition, when the second motor 5 is faulty and cannot drive the second steering device 3, the power input by the first motor 4, or input by the steering wheel 6-1, or input by both the steering wheel 6-1 and the third motor 6-2 can be used to drive the second steering device 3, to provide a redundancy backup function.

It can be learned from the foregoing description that the steering mechanism provided in this embodiment of this application can independently control steering motions of the left and right wheels. In addition, the steering mechanism provided in this embodiment of this application further has a safety redundancy function. When a motor assembly used to drive a single-side steering device is faulty and cannot drive the side of the steering device, for example, when a motor assembly of the first steering device 2 is faulty, a motor assembly of the second steering device 3 on the other side may provide a redundancy backup function. In addition, when a motor assembly on both sides is faulty and cannot drive the steering device, the steering wheel 6-1 serves as a redundant backup and can further continue to provide steering power to the first steering device 2 or the second steering device 3.

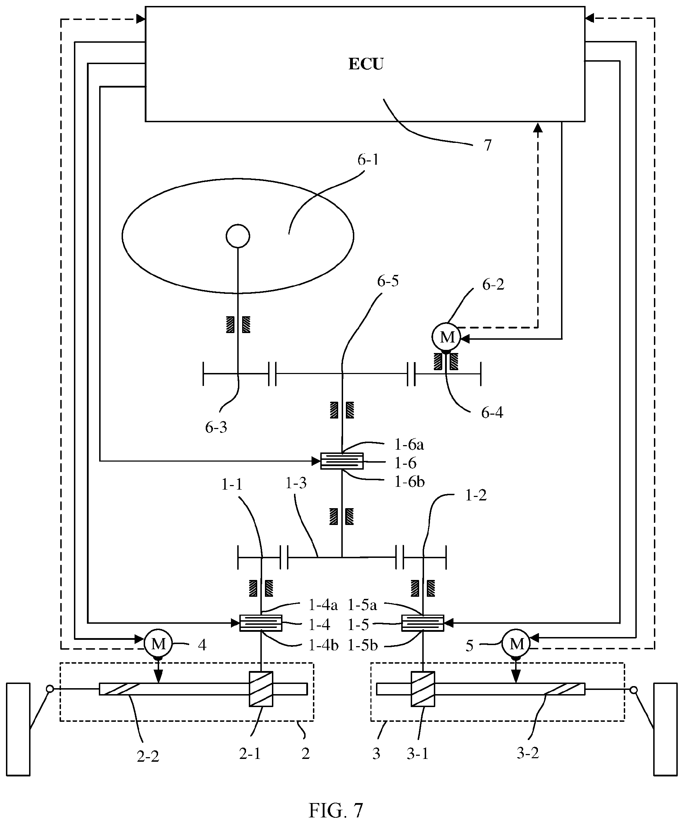

This application further provides another possible implementation solution, as shown in FIG. 7.

FIG. 7 is a schematic diagram of a possible implementation solution of a steering mechanism according to this application. As shown in FIG. 7, the steering mechanism mainly includes a first steering device 2, a second steering device 3, a coupler 1, a first electrically controlled clutch 1-4, and a second electrically controlled clutch 1-5. The first steering device 2 is connected to the coupler 1 through the first electrically controlled clutch 1-4, and the second steering device 3 is connected to the coupler 1 through the second electrically controlled clutch 1-5.

In a possible implementation, the coupler 1 is operated through gear transmission, and power coupling is implemented through gear system transmission of a shaft of the first gear 1-1, a shaft of the second gear 1-2, and the third gear 1-3. Optionally, the steering coupler 1 includes the shaft of the first gear 1-1, the shaft of the second gear 1-2, and a second intermediate gear shaft. The shaft of the first gear 1-1 is connected to the first steering device 2, the shaft of the second gear 1-2 is connected to the second steering device 3, and a shaft gear of the first gear 1-1 is engaged with a shaft gear of the second gear 1-2 through the second intermediate gear shaft 1-3.

In a possible implementation, the first steering device 2 and the second steering device 3 are gear rack steering devices.

Optionally, the first steering device 2 includes a first rack 2-2 and a first steering gear 2-1. A first motor 4 is connected to the first rack 2-2, and the first rack 2-2 may perform a wheel steering action driven by the first motor 4. The first steering gear 2-1 is connected to the coupler 1 through a first electrically controlled clutch 1-4.

Optionally, the second steering device 3 includes a second rack 3-2 and a second steering gear 3-1. A second motor 5 is connected to the second rack 3-2, and the second rack 3-2 may perform a wheel steering action driven by the second motor 5. The second steering gear 3-1 is connected to the coupler 1 through a second electrically controlled clutch 1-5.

Optionally, when the first electrically controlled clutch 1-4 and the second electrically controlled clutch 1-5 are normally closed clutches, in a default condition, the first steering device 2 is coupled with the coupler 1 through the first electrically controlled clutch 1-4, and the second steering device 3 is coupled with the coupler 1 through the second electrically controlled clutch 1-5. When the first electrically controlled clutch 1-4 is controlled and switched to a disconnected state, the first steering device 2 is decoupled from the coupler 1; and when the second electrically controlled clutch 1-5 is controlled and switched to a disconnected state, the second steering device 3 is decoupled from the coupler 1.

In a possible implementation, the steering mechanism provided in this embodiment of this application further includes a steering input mechanism. The steering input mechanism provided in this embodiment of this application includes a steering wheel 6-1.

Optionally, the steering input mechanism provided in this embodiment of this application further includes a third motor 6-2.

Optionally, the steering input mechanism provided in this embodiment of this application further includes a third intermediate gear 6-5.

In a possible implementation, the third intermediate gear is disposed between the steering wheel 6-1 and the coupler 1. A gear on a gear shaft of the steering wheel 6-1 is engaged with a third motor 6-2 gear through a third intermediate gear 6-5.

It should be noted that, the third intermediate gear 6-5 disposed in this implementation solution is to ensure that the steering of the wheel is consistent with the steering of the steering wheel 6-1. The third intermediate gear 6-5 or another mechanism for changing a rotation direction may be further disposed at another position between the steering wheel 6-1 and the wheel, and is not limited between the steering wheel 6-1 and the coupler 1.

Optionally, the gear shaft of the steering wheel 6-1 is engaged with the third intermediate gear 6-5, and a gear shaft of the third intermediate gear 6-5 is connected to the second intermediate gear 1-3 of the coupler 1.

In a possible implementation, the steering mechanism provided in this embodiment of this application further includes a third electrically controlled clutch 1-6.

The steering input mechanism is connected to the coupler 1 through the third electrically controlled clutch 1-6. Optionally, the gear shaft of the steering wheel 6-1 is connected to the third electrically controlled clutch 1-6 through a shaft of the third intermediate gear 6-5, and the third electrically controlled clutch 1-6 is connected to the second intermediate shaft gear 1-3 of the coupler 1.

When the third electrically controlled clutch 1-6 is in a closed state, power of the steering wheel 6-1 may be input to the coupler 1 through the third electrically controlled clutch 1-6; or when the third electrically controlled clutch 1-6 is in a disconnected state, power of the steering wheel 6-1 cannot be input to the coupler 1 through the third electrically controlled clutch 1-6.

FIG. 6 and FIG. 7 respectively show two implementation solutions provided in the embodiments of this application. According to the two solutions, a same technical problem can be resolved, but there are differences in specific implementations. First, a structure of the coupler 1 is different. In the implementation solution shown in FIG. 6, the coupler 1 is operated through an internally engaged gear for transmission. However, in the implementation solution shown in FIG. 7, the coupler 1 is operated through an externally engaged gear for transmission, and an overall size of the coupler 1 is relatively small, to facilitate easy arrangement inside a vehicle. Second, a structure of the steering input mechanism is different. In the implementation solution shown in FIG. 6, the steering wheel 6-1 is connected to the third motor 6-2 through an externally engaged gear. However, in the implementation solution shown in FIG. 7, the steering wheel 6-1 is connected to the third motor 6-2 through the third intermediate gear 6-5 by using a gear pair.

The following describes in more detail a steer-by-wire steering mechanism with a redundancy function provided in an embodiment of this application with reference to a specific scenario and a fault type. According to different application scenarios or fault types, the steer-by-wire steering mechanism provided in embodiments of this application can work in different modes, including a steer-by-wire steering mode and a mechanical steering mode.

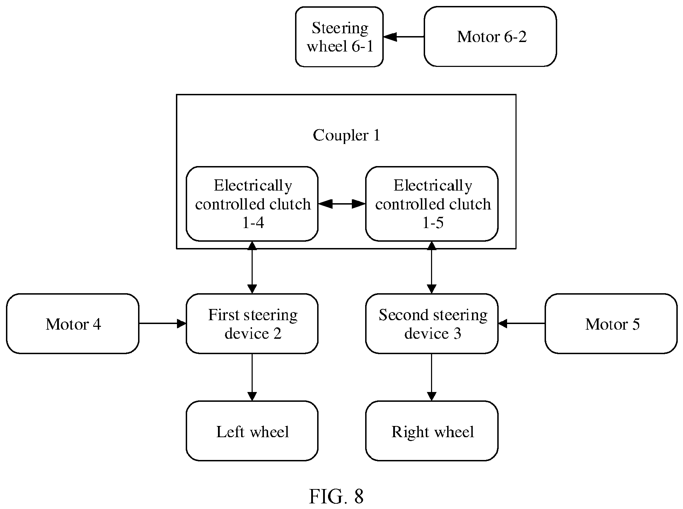

FIG. 8 to FIG. 11 show different working states of a steering mechanism in a steer-by-wire steering mode according to an embodiment of this application.

When a vehicle 100 is in an assisted driving state or a self-driving state, a third electrically controlled clutch 1-6 is in a disconnected state. In this case, a steering wheel 6-1 is decoupled from a coupler 1. The force feedback of the steering wheel 6-1 sensed by a driver comes from a third motor 6-2, and the third motor 6-2 is in a road induction simulation working state.

FIG. 8 shows a working state in a steer-by-wire steering mode. As shown in FIG. 8, in the working state, the third electrically controlled clutch 1-6 is disconnected, and the third electrically controlled clutch 1-6 is not shown. The steering wheel 6-1 is decoupled from the coupler 1. A first electrically controlled clutch 1-4 and a second electrically controlled clutch 1-5 are in a closed state, a first steering device 2 is coupled with the coupler 1 through the first electrically controlled clutch 1-4, and a second steering device 3 is coupled with the coupler 1 through the second electrically controlled clutch 1-5. In this case, steering motions of left and right wheels are mechanically coupled through the coupler 1. In a first possible working state, changes in angles of the left and right wheels are separately driven by a first motor 4. In a second possible working state, changes in angles of the left and right wheels are separately driven by a second motor 5. In a third possible working state, changes in angles of the left and right wheels are driven by both the first motor 4 and the second motor 5.

For the working state shown in FIG. 8, the first steering device 2 and the second steering device 3 are mechanically coupled through the coupler 1. Because the mechanical coupling is used, a change rule of the angles of the left and right wheels meets a transmission ratio requirement of a mechanical transmission system, and does not need to be implemented by separately controlling the left wheel and the right wheel. Therefore, a requirement for a control system can be reduced.

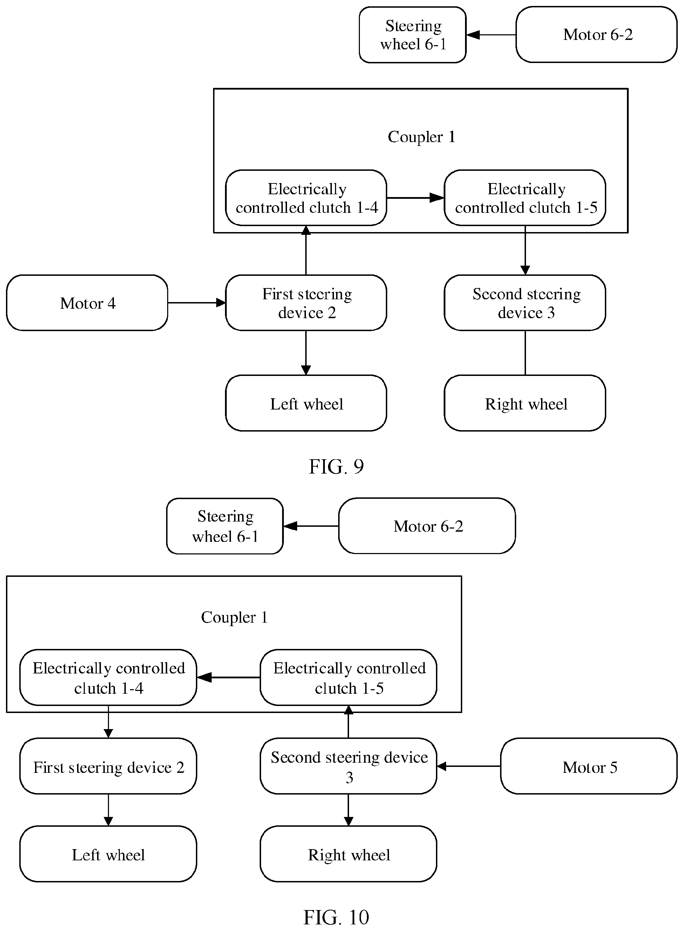

FIG. 9 is a schematic diagram of a working state of a steering mechanism according to an embodiment of this application when a second motor 5 is faulty and cannot drive a second steering device 3. The second motor 5 is not shown. As shown in FIG. 9, in the working state, a third electrically controlled clutch 1-6 is disconnected, and a steering wheel 6-1 is decoupled from a coupler 1. A first electrically controlled clutch 1-4 and a second electrically controlled clutch 1-5 are in a closed state, a first steering device 2 is coupled with the coupler 1 through the first electrically controlled clutch 1-4, and the second steering device 3 is coupled with the coupler 1 through the second electrically controlled clutch 1-5. In this case, steering motions of left and right wheels are mechanically coupled through the coupler 1. In a possible working state, changes in angles of the left and right wheels are independently driven by a first motor 4.

FIG. 10 is a schematic diagram of a working state of a steering mechanism according to an embodiment of this application when a first motor 4 is faulty and cannot drive a first steering device 2. The first motor 4 is not shown. As shown in FIG. 10, in the working state, a third electrically controlled clutch 1-6 is disconnected, and a steering wheel 6-1 is decoupled from a coupler 1. A first electrically controlled clutch 1-4 and a second electrically controlled clutch 1-5 are in a closed state, the first steering device 2 is coupled with the coupler 1 through the first electrically controlled clutch 1-4, and a second steering device 3 is coupled with the coupler 1 through the second electrically controlled clutch 1-5. In this case, steering motions of left and right wheels are mechanically coupled through the coupler 1. In a possible working state, changes in angles of the left and right wheels are independently driven by a second motor 5.

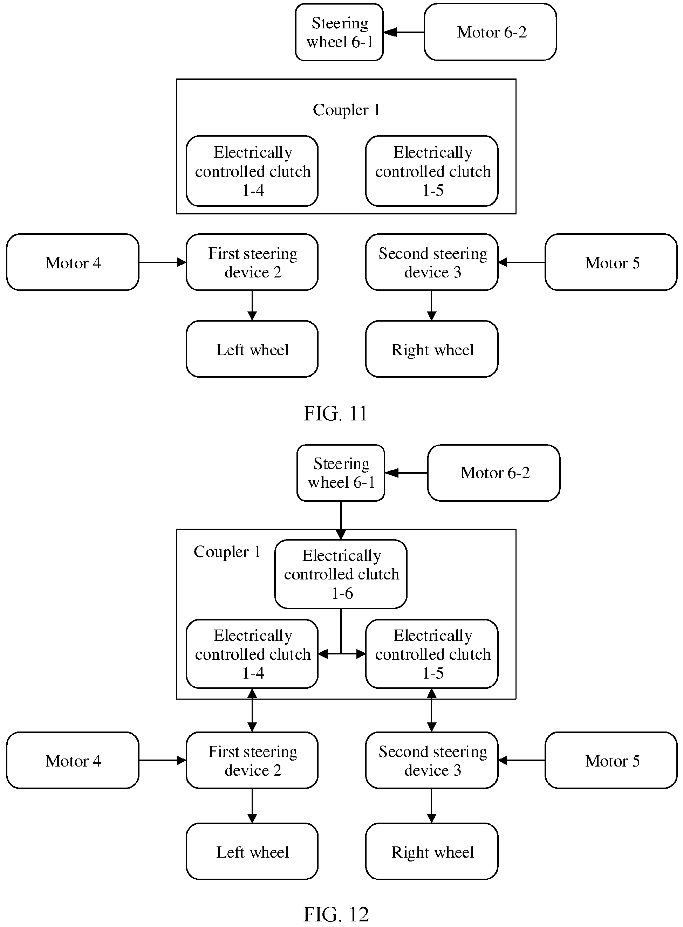

FIG. 11 is a schematic diagram of a working state of a steering mechanism according to an embodiment of this application when steering of left and right wheels is separately controlled. As shown in FIG. 11, in the working state, a third electrically controlled clutch 1-6 is disconnected, a steering wheel 6-1 is decoupled from a coupler 1. The third electrically controlled clutch 1-6 is not shown. A first electrically controlled clutch 1-4 and a second electrically controlled clutch 1-5 are in a disconnected state, a first steering device 2 is decoupled from the coupler 1, and a second steering device 3 is decoupled from the coupler 1. In this case, a steering motion of the left wheel is separately controlled by a first motor 4, and a steering motion of the right wheel is separately controlled by a second motor 5.

For the working state shown in FIG. 11, control of the steering motion of the left wheel is decoupled from control of the steering motion of the right wheel. The steering motion of the left wheel is separately controlled by the first motor 4, and the steering motion of the right wheel is separately controlled by the second motor 5. This can provide more control solutions to wheel angles for the electronic control system, to meet a control requirement in a specific scenario. In the working state shown in FIG. 11, the left wheel is controlled to rotate through a first angle, and the right wheel is controlled to rotate through a second angle. The first angle and the second angle may be randomly specified by the control system.

FIG. 12 to FIG. 17 show different working states of a steering mechanism in a mechanical steering mode according to an embodiment of this application.

When a vehicle 100 is in mechanically controlled steering, a third electrically controlled clutch 1-6 is in a closed state. In this case, a steering wheel 6-1 is coupled with a coupler 1 through the third electrically controlled clutch 1-6.

In a possible implementation, force feedback of the steering wheel 6-1 sensed by the driver comes from a wheel and a third motor 6-2. When the force feedback of the steering wheel 6-1 sensed by the driver comes from the wheel and the third motor 6-2, the third motor 6-2 is in the steering-assisted working state. In another possible implementation, all force feedback of the steering wheel 6-1 sensed by the driver comes from the wheel.

FIG. 12 shows a possible working state in a mechanical control steering mode. As shown in FIG. 12, in the working state, a third electrically controlled clutch 1-6 is closed, and a steering wheel 6-1 is coupled with a coupler 1 through the third electrically controlled clutch 1-6. A first electrically controlled clutch 1-4 and a second electrically controlled clutch 1-5 are in a closed state, a first steering device 2 is coupled with the coupler 1 through the first electrically controlled clutch 1-4, and a second steering device 3 is coupled with the coupler 1 through the second electrically controlled clutch 1-5. In this case, steering motions of left and right wheels are mechanically coupled through the coupler 1. In a possible working state, changes in angles of the left and right wheels are jointly driven by a first motor 4, a second motor 5, and the steering wheel 6-1. In another possible working state, changes in angles of the left and right wheels are jointly driven by the first motor 4, the second motor 5, the steering wheel 6-1, and a third motor 6-2. In this case, the third motor 6-2 is in a steering-assisted working state.

For the working state shown in FIG. 12, the first steering device 2 and the second steering device 3 are mechanically coupled through the coupler 1. Because the mechanical coupling is used, a change rule of the angles of the left and right wheels meets a transmission ratio requirement of a mechanical transmission system, and does not need to be implemented by separately controlling the left wheel and the right wheel. Therefore, a requirement for a control system can be reduced.

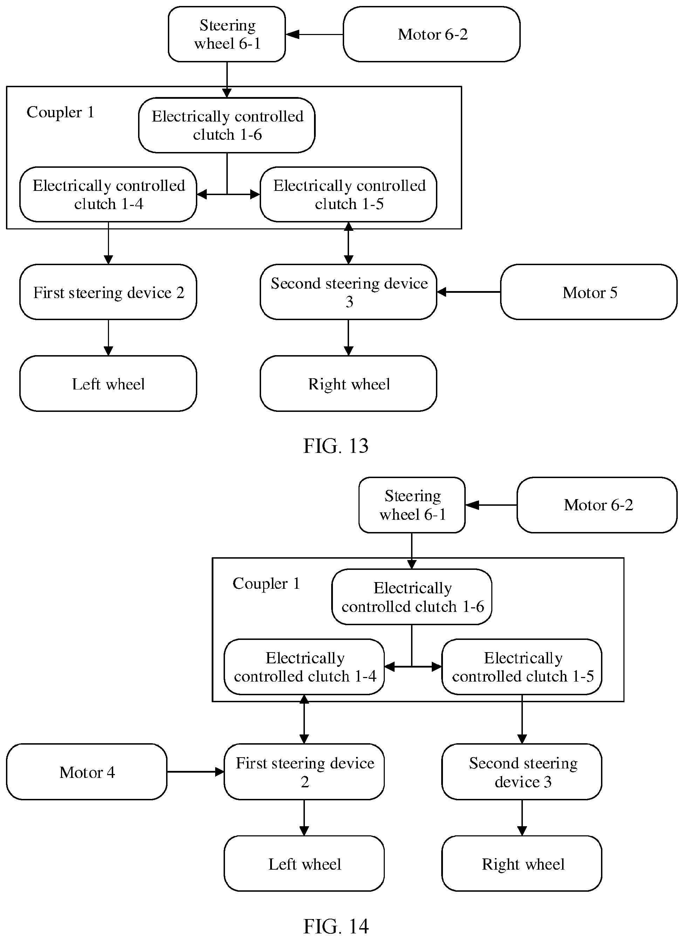

FIG. 13 shows a working state when a first motor 4 is faulty and cannot drive a first steering device 2. The first motor 4 is not shown. As shown in FIG. 13, in the working state, a third electrically controlled clutch 1-6 is closed, and a steering wheel 6-1 is coupled with a coupler 1 through the third electrically controlled clutch 1-6. A first electrically controlled clutch 1-4 and a second electrically controlled clutch 1-5 are in a closed state, a first steering device 2 is coupled with the coupler 1 through the first electrically controlled clutch 1-4, and a second steering device 3 is coupled with the coupler 1 through the second electrically controlled clutch 1-5. In this case, steering motions of left and right wheels are mechanically coupled through the coupler 1. In a possible working state, changes in angles of the left and right wheels are driven by both a second motor 5 and the steering wheel 6-1. In another possible working state, changes in angles of the left and right wheels are jointly driven by the second motor 5, the steering wheel 6-1, and a third motor 6-2. In this case, the third motor 6-2 is in a steering-assisted working state.

FIG. 14 shows a working state when a second motor 5 is faulty and cannot drive a second steering device 3. The second motor 5 is not shown. As shown in FIG. 14, in the working state, a third electrically controlled clutch 1-6 is closed, and a steering wheel 6-1 is coupled with a coupler 1 through the third electrically controlled clutch 1-6. A first electrically controlled clutch 1-4 and a second electrically controlled clutch 1-5 are in a closed state, a first steering device 2 is coupled with the coupler 1 through the first electrically controlled clutch 1-4, and the second steering device 3 is coupled with the coupler 1 through the second electrically controlled clutch 1-5. In this case, steering motions of left and right wheels are mechanically coupled through the coupler 1. In a possible working state, changes in angles of the left and right wheels are driven by both a first motor 4 and the steering wheel 6-1. In another possible working state, changes in angles of the left and right wheels are jointly driven by the first motor 4, the steering wheel 6-1, and a third motor 6-2. In this case, the third motor 6-2 is in a steering-assisted working state.

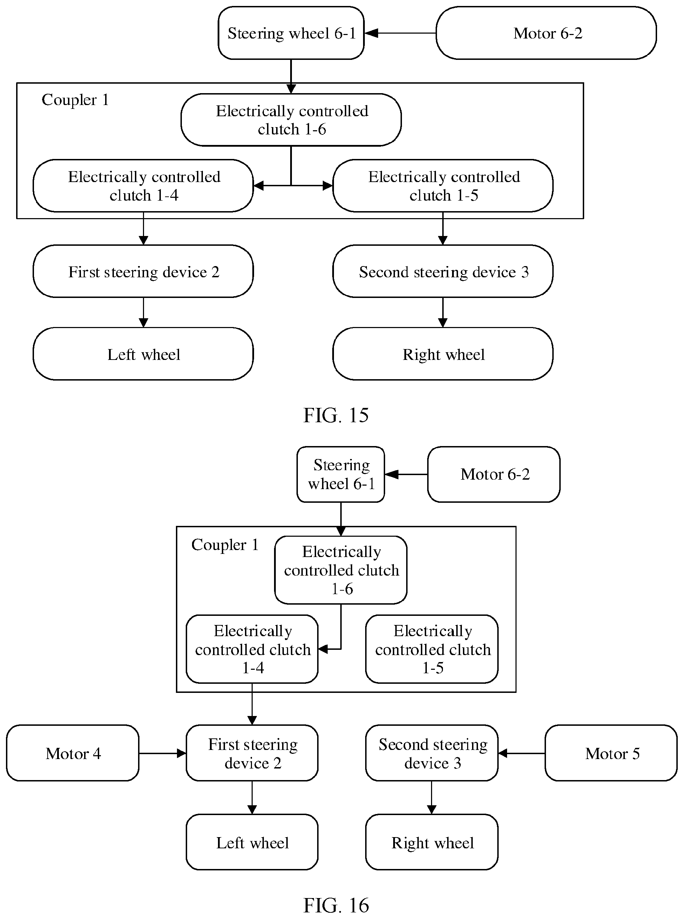

FIG. 15 shows a working state when a first motor 4 is faulty and cannot drive a first steering device 2, and a second motor 5 is also faulty and cannot drive a second steering device 3. The first motor 4 and the second motor 5 are not shown. As shown in FIG. 15, in the working state, a third electrically controlled clutch 1-6 is closed, and a steering wheel 6-1 is coupled with a coupler 1 through the third electrically controlled clutch 1-6. A first electrically controlled clutch 1-4 and a second electrically controlled clutch 1-5 are in a closed state, the first steering device 2 is coupled with the coupler 1 through the first electrically controlled clutch 1-4, and the second steering device 3 is coupled with the coupler 1 through the second electrically controlled clutch 1-5. In this case, steering motions of left and right wheels are mechanically coupled through the coupler 1. In a possible working state, changes in angles of the left and right wheels are driven by the steering wheel 6-1. In another possible working state, changes in angles of the left and right wheels are driven by both the steering wheel 6-1 and a third motor 6-2. In this case, the third motor 6-2 is in a steering-assisted working state.

For the working state shown in FIG. 15, the steering wheel 6-1 is coupled with the coupler 1, and the steering wheel 6-1 controls the wheel angles through the coupler 1 and the first steering device 2 and the second steering device 3 respectively, thereby implementing redundancy backup of the steering driving force. Therefore, for the steering mechanism provided in this embodiment of this application, even if both the first motor 4 and the second motor 5 cannot provide the steering driving force due to a fault, the driver may still operate the steering wheel angle by using the steering wheel 6-1, to ensure driving safety.

FIG. 16 is a working state in which a first steering device 2 is coupled with a steering wheel. As shown in FIG. 16, in the working state, a third electrically controlled clutch 1-6 is closed, and a steering wheel 6-1 is coupled with a coupler 1 through the third electrically controlled clutch 1-6. A first electrically controlled clutch 1-4 is in a closed state, and the first steering device 2 is coupled with the coupler 1 through the first electrically controlled clutch 1-4. A second electrically controlled clutch 1-5 is in an open state, and a second steering device 3 is decoupled from the coupler 1. In this case, the first steering device 2 is coupled with the steering wheel 6-1 through the coupler 1, and an angle of a left wheel is limited by a maximum angle of the steering wheel 6-1 and a transmission ratio of a transmission system. The second steering device 3 is decoupled from the steering wheel, and an angle of a right wheel is not limited by the maximum angle of the steering wheel 6-1 and the transmission ratio of the transmission system. In a first possible working state, changes in angles of the left wheel are driven by the steering wheel 6-1, and changes in angles of the right wheel are driven by a second motor 5. In a second possible working state, changes in angles of the left wheel are driven by the steering wheel 6-1 and a third motor 6-2, and changes in angles of the right wheel are driven by the second motor 5. In a third possible working state, changes in angles of the left wheel are driven by a first motor 4, the steering wheel 6-1, and the third motor 6-2, and changes in angles of the right wheel are driven by the second motor 5.

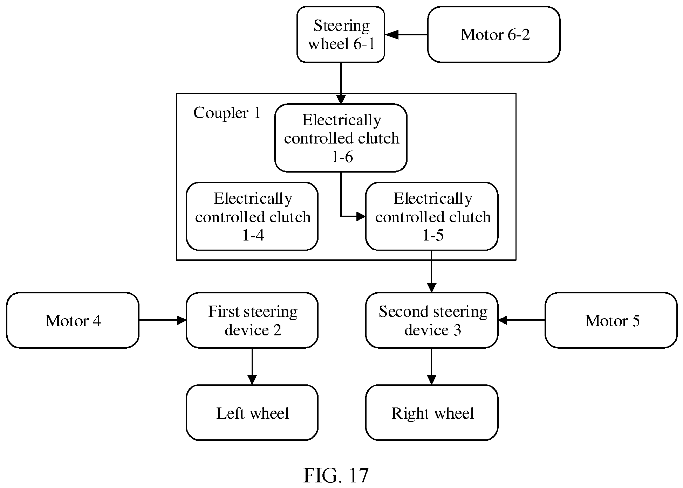

FIG. 17 is a working state in which a second steering device 3 is coupled with a steering wheel. As shown in FIG. 17, in the working state, a third electrically controlled clutch 1-6 is closed, and a steering wheel 6-1 is coupled with a coupler 1 through the third electrically controlled clutch 1-6. A second electrically controlled clutch 1-5 is in a closed state, and the second steering device 3 is coupled with the coupler 1 through the second electrically controlled clutch 1-5. A first electrically controlled clutch 1-4 is in an open state, and a first steering device 2 is decoupled from the coupler 1. In this case, the second steering device 3 is coupled with the steering wheel 6-1 through the coupler 1, and an angle of a right wheel is limited by a maximum angle of the steering wheel 6-1 and a transmission ratio of a transmission system. The first steering device 2 is decoupled from the steering wheel, and an angle of a left wheel is not limited by the maximum angle of the steering wheel 6-1 and the transmission ratio of the transmission system. In a first possible working state, changes in angles of the right wheel are driven by the steering wheel 6-1, and changes in angles of the left wheel are driven by a first motor 4. In a second possible working state, changes in angles of the right wheel are driven by the steering wheel 6-1 and a third motor 6-2, and changes in angles of the left wheel are driven by the first motor 4. In a third possible working state, changes in angles of the right wheel are driven by a second motor 5, the steering wheel 6-1, and the third motor 6-2, and changes in angles of the left wheel are driven by the first motor 4.

It should be noted that the working state shown in FIG. 16 or FIG. 17 may be applicable to a scenario in which a single-side wheel has a tire burst. When a tire burst occurs, the driver may swerve in an emergency. In this case, a tire of a wheel may be in danger of being detached from a hub due to an excessive lateral force. To avoid a case in which the tire is detached from the hub due to the excessively large lateral force during steering after the tire burst occurs, when the tire burst occurs on a wheel on one side, for example, when the tire burst occurs on a right wheel, the coupler 1 is switched to a working state, so that the steering device 3 on the right side in this example is decoupled from the coupler 1, and the steering device 3 on the right side is driven by the second motor 5. An angle of the right wheel is controlled in a reasonable range to avoid the dangers of tire disengagement of the wheel caused by the driver's excessive operation.

It can be learned from the foregoing that the steering mechanism provided in this embodiment of this application includes at least the following beneficial effects.

According to the steering mechanism provided in this embodiment of this application, the steering motions of the left and right wheels can be independently controlled, and a larger control domain is provided for assisted driving and self-driving, so that performance of an intelligent driving system can be fully utilized.

The steering mechanism provided in this embodiment of this application retains an advantage of a conventional steering mechanism. By default, left and right wheel steering is kept mechanically coupled, and an angle relationship between the left and right wheels may be ensured by using a mechanical system, thereby reducing a requirement on a control system. For example, an advantage of a steering trapezoid during mechanical coupling can be used to ensure control precision.

In the steering mechanism provided in this embodiment of this application, a mechanical connection between the steering wheel 6-1 and the wheel is more time-effective than that in a hydraulic system, and is more suitable for a low-delay control requirement of the steering system. In addition, an overall structure is relatively simple, a size is small, and there is no complex hydraulic pipeline or complex planetary reducer, which facilitates arrangement on a real vehicle.

The steering mechanism provided in this embodiment of this application has no high-power oil pump, and the third motor 6-2 or a booster motor does not work at all times. Therefore, energy consumption is relatively low, and it is more economical to use the vehicle.

The steering mechanism provided in this embodiment of this application may use dual-motor redundancy backup in both the steer-by-wire steering mode and the mechanical steering mode, to ensure higher safety.

Because the steering wheel 6-1 provided in this embodiment of this application is connected to the wheel by using a mechanical system. Therefore, even if the control system is completely invalid, or motors on the left and right sides cannot drive the steering device due to a fault, the driver can still use the steering wheel 6-1 to control the horizontal driving track of the vehicle, thereby ensuring driving safety.

In addition, an embodiment of this application provides an intelligent vehicle. The intelligent vehicle includes a processor. The processor is coupled with a memory. The memory stores program instructions. When the program instructions stored in the memory are executed by the processor, the foregoing control method in different working modes is implemented.

An embodiment of this application provides an intelligent vehicle. The intelligent vehicle includes a processing circuit and a storage circuit. The processing circuit and the storage circuit are configured to perform the control method in the foregoing different operating modes.

An embodiment of this application provides a control unit, including programmable instructions. When the programmable instructions are invoked, the control method in the foregoing different working modes can be performed.

An embodiment of this application provides a computer-readable storage medium, including a program. When the program runs on a computer, the computer is enabled to perform the control method in the foregoing different operating modes.

An embodiment of this application provides a computer program product. When the computer program product runs on a computer, the computer is enabled to perform the control method in the foregoing different operating modes.

An embodiment of this application provides a chip. The chip is coupled with a memory, and is configured to execute a program stored in the memory, to perform the control method in the foregoing different working modes.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A steering mechanism, comprising: a coupler (1), a steering executing mechanism (2, 3), and a steering driving mechanism (4, 5), wherein
the steering executing mechanism comprises a first steering device (2) and a second steering device (3);
the steering driving mechanism comprises a first motor (4) and a second motor (5), wherein the first motor (4) is connected to the first steering device (2), the first steering device (2) is allowed to be driven by the first motor (4) to change an angle of a first wheel, the second motor (5) is connected to the second steering device (3), and the second steering device (3) is allowed to be driven by the second motor (5) to change an angle of a second wheel;
the coupler (1) comprises a first output end and a second output end, the first steering device (2) is connected to the first output end of the coupler (1), and the second steering device (3) is connected to the second output end of the coupler (1); and
the coupler (1) comprises a first working state, a second working state, a third working state, and a fourth working state, wherein when the coupler (1) is in the first working state, the first steering device (2) is coupled with the coupler (1), and the second steering device (3) is coupled with the coupler (1); when the coupler (1) is in the second working state, the first steering device (2) is decoupled from the coupler (1), and the second steering device (3) is decoupled from the coupler (1); when the coupler (1) is in the third working state, the first steering device (2) is coupled with the coupler (1), and the second steering device (3) is decoupled from the coupler (1); or when the coupler (1) is in the fourth working state, the first steering device (2) is decoupled from the coupler (1), and the second steering device (3) is coupled with the coupler (1).

2. The steering mechanism according to claim 1, wherein
the coupler (1) comprises: a first gear (1-1), a second gear (1-2), a third gear (1-3), a first electrically controlled clutch (1-4), and a second electrically controlled clutch (1-5), wherein
the first gear (1-1) is engaged with the second gear (1-2) through the third gear (1-3);
the first electrically controlled clutch (1-4) comprises a first input end (1-4a) and a first output end (1-4b), and the first gear (1-1) is connected to the first input end (1-4a) of the first electrically controlled clutch (1-4);
the second electrically controlled clutch (1-5) comprises a second input end (1-5a) and a second output end (1-5b), and the second gear (1-2) is connected to the second input end (1-5a) of the second electrically controlled clutch (1-5);
the first electrically controlled clutch (1-4) comprises a fifth working state and a sixth working state, and when the first electrically controlled clutch (1-4) is in the fifth working state, the first output end (1-4b) of the first electrically controlled clutch (1-4) is coupled with the first input end (1-4a), or when the first electrically controlled clutch (1-4) is in the sixth working state, the first output end (1-4b) of the first electrically controlled clutch (1-4) is decoupled from the first input end (1-4a); and
the second electrically controlled clutch (1-5) comprises a seventh working state and an eighth working state, and when the second electrically controlled clutch (1-5) is in the seventh working state, the second output end (1-5b) of the second electrically controlled clutch (1-5) is coupled with the second input end (1-5a), or when the second electrically controlled clutch (1-5) is in the eighth working state, the second output end (1-5b) of the second electrically controlled clutch (1-5) is decoupled from the second input end (1-5a).

3. The steering mechanism according to claim 2, wherein the third gear (1-3) is a ring gear (1-3), the ring gear (1-3) is internally engaged with the first gear (1-1), the ring gear (1-3) is internally engaged with the second gear (1-2), and the first gear (1-1) is coupled with the second gear (1-2) through the ring gear (1-3).

4. The steering mechanism according to claim 2, wherein the third gear (1-3) is an intermediate gear (1-7), the intermediate gear (1-7) is externally engaged with the first gear (1-1), the intermediate gear (1-7) is externally engaged with the second gear (1-2), and the first gear (1-1) is coupled with the second gear (1-2) through the intermediate gear (1-7).

5. The steering mechanism according to any one of claims 1 to 4, further comprising a steering input mechanism (6), wherein the steering input mechanism (6) comprises a steering wheel (6-1).

6. The steering mechanism according to claim 5, wherein the steering input mechanism (6) further comprises a third motor (6-2), and the third motor (6-2) is coupled with the steering wheel (6-1).

7. The steering mechanism according to claim 5 or 6, further comprising a third electrically controlled clutch (1-6), wherein
the third electrically controlled clutch (1-6) comprises a third input end (1-6a) and a third output end (1-6b);
the steering input mechanism is connected to the third input end (1-6a) of the third electrically controlled clutch (1-6);
the third gear (1-3) is connected to the third output end (1-6b) of the third electrically controlled clutch (1-6); and
the third electrically controlled clutch (1-6) comprises a ninth working state and a tenth working state, and when the third electrically controlled clutch (1-6) is in the ninth working state, the third output end (1-6b) of the third electrically controlled clutch (1-6) is coupled with the third input end (1-6a), or when the third electrically controlled clutch (1-6) is in the tenth working state, the third output end (1-6b) of the third electrically controlled clutch (1-6) is decoupled from the third input end (1-6a).

8. The steering mechanism according to any one of claims 1 to 7, wherein
a first deceleration mechanism is further comprised between the first motor (4) and the first steering device (2); and
a second deceleration mechanism is further comprised between the second motor (5) and the second steering device (3).

9. The steering mechanism according to any one of claims 1 to 8, wherein
the first steering device (2) comprises a first steering gear (2-1) and a first rack (2-2);
the second steering device (3) comprises a second steering gear (3-1) and a second rack (3-2);
the first rack (2-2) is engaged with the first steering gear (2-1), and the first rack (2-2) is allowed to be driven by the first steering gear (2-1);
the second rack (3-2) is engaged with the second steering gear (3-1), and the second rack (3-2) is allowed to be driven by the second steering gear (3-1);
the first motor (4) is mechanically connected to the first rack (2-2), and the first rack (2-2) is allowed to be driven by the first motor (4); and
the second motor (5) is mechanically connected to the second rack (3-2), and the second rack (3-2) is allowed to be driven by the second motor (5).

10. A vehicle, comprising the steering mechanism according to any one of claims 1 to 9.

11. A control method, applied to a steering system, wherein
the steering system comprises the steering mechanism according to any one of claims 1 to 9; and
the steering control method comprises:
receiving, by a control unit, status signals of the first steering device and the second steering device;
sending, by the control unit, a first instruction to the first electrically controlled clutch (1-4) and the second electrically controlled clutch (1-5) based on a received first fault signal, wherein
the first instruction is used to instruct the first electrically controlled clutch (1-4) and the second electrically controlled clutch (1-5) to be closed;
coupling, by the first electrically controlled clutch (1-4), the first steering device (2) with the coupler (1) in response to the first instruction; and
coupling, by the second electrically controlled clutch (1-5), the second steering device (3) with the coupler (1) in response to the first instruction.

12. The control method according to claim 11, further comprising:
sending, by the control unit, a second instruction to the first electrically controlled clutch (1-4), the second electrically controlled clutch (1-5), and the third electrically controlled clutch (1-6) based on a received second fault signal, wherein
the second instruction is used to instruct the first electrically controlled clutch (1-4), the second electrically controlled clutch (1-5), and the third electrically controlled clutch (1-6) to be closed;
coupling, by the first electrically controlled clutch (1-4), the first steering device (2) with the coupler (1) in response to the second instruction;
coupling, by the second electrically controlled clutch (1-5), the first steering device (2) with the coupler (1) in response to the second instruction; and
coupling, by the third electrically controlled clutch (1-6), the steering input mechanism (6) with the coupler (1) in response to the second instruction, wherein
the first steering device (2) and the second steering device (3) can be driven by the steering input mechanism (6).

13. The control method according to claim 11, further comprising:
detecting, by the control unit, a tire pressure signal;
sending, by the control unit, a third instruction to the first electrically controlled clutch (1-4), the second electrically controlled clutch (1-5), and the third electrically controlled clutch (1-6) based on a received third fault signal based on the tire pressure signal, wherein
the third instruction is used to instruct the first electrically controlled clutch (1-4) and the third electrically controlled clutch (1-6) to be closed, and instruct the second electrically controlled clutch (1-5) to be disconnected;
coupling, by the first electrically controlled clutch (1-4), the first steering device (2) with the coupler (1) in response to the third instruction;
decoupling, by the second electrically controlled clutch (1-5), the second steering device (3) from the coupler (1) in response to the third instruction; and
coupling, by the third electrically controlled clutch (1-6), the steering input mechanism (6) with the coupler (1) in response to the third instruction.

14. The control method according to claim 11, further comprising:
detecting, by the control unit, a tire pressure signal;
sending, by the control unit, a third instruction to the first electrically controlled clutch (1-4), the second electrically controlled clutch (1-5), and the third electrically controlled clutch (1-6) based on a received fourth fault signal based on the tire pressure signal, wherein
the fourth instruction is used to instruct the second electrically controlled clutch (1-5) and the third electrically controlled clutch (1-6) to be closed, and instruct the first electrically controlled clutch (1-4) to be disconnected;
decoupling, by the first electrically controlled clutch (1-4), the first steering device (2) from the coupler (1) in response to the fourth instruction;
coupling, by the second electrically controlled clutch (1-5), the second steering device (3) with the coupler (1) in response to the fourth instruction; and
coupling, by the third electrically controlled clutch (1-6), the steering input mechanism (6) with the coupler (1) in response to the fourth instruction.

15. A computer-readable storage medium, comprising a program, wherein when the program runs on a computer, the computer is enabled to perform the method according to any one of claims 11 to 14.

## Patentansprüche

1. Lenkmechanismus, umfassend: einen Koppler (1), einen Lenkausführungsmechanismus (2, 3) und einen Lenkantriebsmechanismus (4, 5), wobei
der Lenkausführungsmechanismus eine erste Lenkvorrichtung (2) und eine zweite Lenkvorrichtung (3) umfasst;
der Lenkantriebsmechanismus einen ersten Motor (4) und einen zweiten Motor (5) umfasst, wobei der erste Motor (4) mit der ersten Lenkvorrichtung (2) verbunden ist, es der ersten Lenkvorrichtung (2) ermöglicht wird, durch den ersten Motor (4) angetrieben zu werden, um einen Winkel eines ersten Rads zu ändern, der zweite Motor (5) mit der zweiten Lenkvorrichtung (3) verbunden ist und es der zweiten Lenkvorrichtung (3) ermöglicht wird, durch den zweiten Motor (5) angetrieben zu werden, um einen Winkel eines zweiten Rads zu ändern;
der Koppler (1) ein erstes Ausgangsende und ein zweites Ausgangsende umfasst, die erste Lenkvorrichtung (2) mit dem ersten Ausgangsende des Kopplers (1) verbunden ist und die zweite Lenkvorrichtung (3) mit dem zweiten Ausgangsende des Kopplers (1) verbunden ist; und
der Koppler (1) einen ersten Arbeitszustand, einen zweiten Arbeitszustand, einen dritten Arbeitszustand und einen vierten Arbeitszustand aufweist, wobei, wenn sich der Koppler (1) in dem ersten Arbeitszustand befindet, die erste Lenkvorrichtung (2) mit dem Koppler (1) gekoppelt ist und die zweite Lenkvorrichtung (3) mit dem Koppler (1) gekoppelt ist; wenn sich der Koppler (1) in dem zweiten Arbeitszustand befindet, die erste Lenkvorrichtung (2) von dem Koppler (1) entkoppelt ist und die zweite Lenkvorrichtung (3) von dem Koppler (1) entkoppelt ist; wenn sich der Koppler (1) in dem dritten Arbeitszustand befindet, die erste Lenkvorrichtung (2) mit dem Koppler (1) gekoppelt ist und die zweite Lenkvorrichtung (3) von dem Koppler (1) entkoppelt ist; oder wenn sich der Koppler (1) in dem vierten Arbeitszustand befindet, die erste Lenkvorrichtung (2) von dem Koppler (1) entkoppelt ist und die zweite Lenkvorrichtung (3) mit dem Koppler (1) gekoppelt ist.

2. Lenkmechanismus nach Anspruch 1, wobei
der Koppler (1) Folgendes umfasst: ein erstes Zahnrad (1-1), ein zweites Zahnrad (1-2), ein drittes Zahnrad (1-3), eine erste elektrisch gesteuerte Kupplung (1-4) und eine zweite elektrisch gesteuerte Kupplung (1-5), wobei
das erste Zahnrad (1-1) über das dritte Zahnrad (1-3) mit dem zweiten Zahnrad (1-2) in Eingriff steht;
die erste elektrisch gesteuerte Kupplung (1-4) ein erstes Eingangsende (1-4a) und ein erstes Ausgangsende (1-4b) umfasst und das erste Zahnrad (1-1) mit dem ersten Eingangsende (1-4a) der ersten elektrisch gesteuerten Kupplung (1-4) verbunden ist; die zweite elektrisch gesteuerte Kupplung (1-5) ein zweites Eingangsende (1-5a) und ein zweites Ausgangsende (1-5b) umfasst und das zweite Zahnrad (1-2) mit dem zweiten Eingangsende (1-5a) der zweiten elektrisch gesteuerten Kupplung (1-5) verbunden ist;
die erste elektrisch gesteuerte Kupplung (1-4) einen fünften Arbeitszustand und einen sechsten Arbeitszustand umfasst und, wenn sich die erste elektrisch gesteuerte Kupplung (1-4) in dem fünften Arbeitszustand befindet, das erste Ausgangsende (1-4b) der ersten elektrisch gesteuerten Kupplung (1-4) mit dem ersten Eingangsende (1-4a) gekoppelt ist oder, wenn sich die erste elektrisch gesteuerte Kupplung (1-4) in dem sechsten Arbeitszustand befindet, das erste Ausgangsende (1-4b) der ersten elektrisch gesteuerten Kupplung (1-4) von dem ersten Eingangsende (1-4a) entkoppelt ist; und
die zweite elektrisch gesteuerte Kupplung (1-5) einen siebten Arbeitszustand und einen achten Arbeitszustand umfasst und, wenn sich die zweite elektrisch gesteuerte Kupplung (1-5) in dem siebten Arbeitszustand befindet, das zweite Ausgangsende (1-5b) der zweiten elektrisch gesteuerten Kupplung (1-5) mit dem zweiten Eingangsende (1-5a) gekoppelt ist oder, wenn sich die zweite elektrisch gesteuerte Kupplung (1-5) in dem achten Arbeitszustand befindet, das zweite Ausgangsende (1-5b) der zweiten elektrisch gesteuerten Kupplung (1-5) von dem zweiten Eingangsende (1-5a) entkoppelt ist.

3. Lenkmechanismus nach Anspruch 2, wobei das dritte Zahnrad (1-3) ein Hohlrad (1-3) ist, das Hohlrad (1-3) innen mit dem ersten Zahnrad (1-1) in Eingriff steht, das Hohlrad (1-3) innen mit dem zweiten Zahnrad (1-2) in Eingriff steht und das erste Zahnrad (1-1) über das Hohlrad (1-3) mit dem zweiten Zahnrad (1-2) gekoppelt ist.

4. Lenkmechanismus nach Anspruch 2, wobei das dritte Zahnrad (1-3) ein Zwischenzahnrad (1-7) ist, das Zwischenzahnrad (1-7) außen mit dem ersten Zahnrad (1-1) in Eingriff steht, das Zwischenzahnrad (1-7) außen mit dem zweiten Zahnrad (1-2) in Eingriff steht und das erste Zahnrad (1-1) über das Zwischenzahnrad (1-7) mit dem zweiten Zahnrad (1-2) gekoppelt ist.

5. Lenkmechanismus nach einem der Ansprüche 1 bis 4, ferner umfassend einen Lenkeingabemechanismus (6), wobei der Lenkeingabemechanismus (6) ein Lenkrad (6-1) umfasst.

6. Lenkmechanismus nach Anspruch 5, wobei der Lenkeingabemechanismus (6) ferner einen dritten Motor (6-2) umfasst und der dritte Motor (6-2) mit dem Lenkrad (6-1) gekoppelt ist.

7. Lenkmechanismus nach Anspruch 5 oder 6, ferner umfassend eine dritte elektrisch gesteuerte Kupplung (1-6), wobei
die dritte elektrisch gesteuerte Kupplung (1-6) ein drittes Eingangsende (1-6a) und ein drittes Ausgangsende (1-6b) umfasst;
der Lenkeingabemechanismus mit dem dritten Eingangsende (1-6a) der dritten elektrisch gesteuerten Kupplung (1-6) verbunden ist;
das dritte Zahnrad (1-3) mit dem dritten Ausgangsende (1-6b) der dritten elektrisch gesteuerten Kupplung (1-6) verbunden ist; und
die dritte elektrisch gesteuerte Kupplung (1-6) einen neunten Arbeitszustand und einen zehnten Arbeitszustand umfasst und, wenn sich die dritte elektrisch gesteuerte Kupplung (1-6) in dem neunten Arbeitszustand befindet, das dritte Ausgangsende (1-6b) der dritten elektrisch gesteuerten Kupplung (1-6) mit dem dritten Eingangsende (1-6a) gekoppelt ist oder, wenn sich die dritte elektrisch gesteuerte Kupplung (1-6) in dem zehnten Arbeitszustand befindet, das dritte Ausgangsende (1-6b) der dritten elektrisch gesteuerten Kupplung (1-6) von dem dritten Eingangsende (1-6a) entkoppelt ist.

8. Lenkmechanismus nach einem der Ansprüche 1 bis 7, wobei
ein erster Verzögerungsmechanismus ferner zwischen dem ersten Motor (4) und der ersten Lenkvorrichtung (2) umfasst ist; und
ein zweiter Verzögerungsmechanismus ferner zwischen dem zweiten Motor (5) und der zweiten Lenkvorrichtung (3) umfasst ist.

9. Lenkmechanismus nach einem der Ansprüche 1 bis 8, wobei
die erste Lenkvorrichtung (2) ein erstes Lenkgetriebe (2-1) und eine erste Zahnstange (2-2) umfasst;
die zweite Lenkvorrichtung (3) ein zweites Lenkgetriebe (3-1) und eine zweite Zahnstange (3-2) umfasst;
die erste Zahnstange (2-2) mit dem ersten Lenkgetriebe (2-1) in Eingriff steht und es der ersten Zahnstange (2-2) ermöglicht wird, durch das erste Lenkgetriebe (2-1) angetrieben zu werden;
die zweite Zahnstange (3-2) mit dem zweiten Lenkgetriebe (3-1) in Eingriff steht und es der zweiten Zahnstange (3-2) ermöglicht wird, durch das zweite Lenkgetriebe (3-1) angetrieben zu werden;
der erste Motor (4) mechanisch mit der ersten Zahnstange (2-2) verbunden ist und es der ersten Zahnstange (2-2) ermöglicht wird, durch den ersten Motor (4) angetrieben zu werden; und
der zweite Motor (5) mechanisch mit der zweiten Zahnstange (3-2) verbunden ist und es der zweiten Zahnstange (3-2) ermöglicht wird, durch den zweiten Motor (5) angetrieben zu werden.

10. Fahrzeug, umfassend den Lenkmechanismus nach einem der Ansprüche 1 bis 9.

11. Steuerverfahren, das auf ein Lenksystem angewendet wird, wobei
das Lenksystem den Lenkmechanismus nach einem der Ansprüche 1 bis 9 umfasst; und
das Lenksteuerungsverfahren Folgendes umfasst:
Empfangen, durch eine Steuereinheit, von Statussignalen der ersten Lenkvorrichtung und der zweiten Lenkvorrichtung;
Senden, durch die Steuereinheit, einer ersten Anweisung an die erste elektrisch gesteuerte Kupplung (1-4) und die zweite elektrisch gesteuerte Kupplung (1-5) basierend auf einem empfangenen ersten Fehlersignal, wobei
die erste Anweisung dazu verwendet wird, anzuweisen, dass die erste elektrisch gesteuerte Kupplung (1-4) und die zweite elektrisch gesteuerte Kupplung (1-5) zu schließen sind;
Koppeln, durch die erste elektrisch gesteuerte Kupplung (1-4), der ersten Lenkvorrichtung (2) mit dem Koppler (1) als Reaktion auf die erste Anweisung und
Koppeln, durch die zweite elektrisch gesteuerte Kupplung (1-5), der zweiten Lenkvorrichtung (3) mit dem Koppler (1) als Reaktion auf die erste Anweisung.

12. Steuerungsverfahren nach Anspruch 11, ferner umfassend:
Senden, durch die Steuereinheit, einer zweiten Anweisung an die erste elektrisch gesteuerte Kupplung (1-4), die zweite elektrisch gesteuerte Kupplung (1-5) und die dritte elektrisch gesteuerte Kupplung (1-6) basierend auf einem empfangenen zweiten Fehlersignal, wobei
die erste Anweisung dazu verwendet wird, anzuweisen, dass die erste elektrisch gesteuerte Kupplung (1-4), die zweite elektrisch gesteuerte Kupplung (1-5) und die dritte elektrisch gesteuerte Kupplung (1-6) zu schließen sind;
Koppeln, durch die erste elektrisch gesteuerte Kupplung (1-4), der ersten Lenkvorrichtung (2) mit dem Koppler (1) als Reaktion auf die zweite Anweisung;
Koppeln, durch die zweite elektrisch gesteuerte Kupplung (1-5), der ersten Lenkvorrichtung (2) mit dem Koppler (1) als Reaktion auf die zweite Anweisung; und
Koppeln, durch die dritte elektrisch gesteuerte Kupplung (1-6), des Lenkeingabemechanismus (6) mit dem Koppler (1) als Reaktion auf die zweite Anweisung, wobei
die erste Lenkvorrichtung (2) und die zweite Lenkvorrichtung (3) durch den Lenkeingabemechanismus (6) antreibbar sind.

13. Steuerungsverfahren nach Anspruch 11, ferner umfassend:
Erfassen, durch die Steuereinheit, eines Reifendrucksignals;
Senden, durch die Steuereinheit, einer dritten Anweisung an die erste elektrisch gesteuerte Kupplung (1-4), die zweite elektrisch gesteuerte Kupplung (1-5) und die dritte elektrisch gesteuerte Kupplung (1-6) basierend auf einem empfangenen dritten Fehlersignal basierend auf dem Reifendrucksignal, wobei die dritte Anweisung dazu verwendet wird, anzuweisen, dass die erste elektrisch gesteuerte Kupplung (1-4) und die dritte elektrisch gesteuerte Kupplung (1-6) zu schließen sind, und anzuweisen, dass die zweite elektrisch gesteuerte Kupplung (1-5) zu trennen ist;
Koppeln, durch die erste elektrisch gesteuerte Kupplung (1-4), der ersten Lenkvorrichtung (2) mit dem Koppler (1) als Reaktion auf die dritte Anweisung;
Entkoppeln, durch die zweite elektrisch gesteuerte Kupplung (1-5), der zweiten Lenkvorrichtung (3) von dem Koppler (1) als Reaktion auf die dritte Anweisung; und
Koppeln, durch die dritte elektrisch gesteuerte Kupplung (1-6), des Lenkeingabemechanismus (6) mit dem Koppler (1) als Reaktion auf die dritte Anweisung.

14. Steuerungsverfahren nach Anspruch 11, ferner umfassend:
Erfassen, durch die Steuereinheit, eines Reifendrucksignals;
Senden, durch die Steuereinheit, einer dritten Anweisung an die erste elektrisch gesteuerte Kupplung (1-4), die zweite elektrisch gesteuerte Kupplung (1-5) und die dritte elektrisch gesteuerte Kupplung (1-6) basierend auf einem empfangenen vierten Fehlersignal basierend auf dem Reifendrucksignal, wobei die dritte Anweisung dazu verwendet wird, anzuweisen, dass die zweite elektrisch gesteuerte Kupplung (1-5) und die dritte elektrisch gesteuerte Kupplung (1-6) zu schließen sind, und anzuweisen, dass die erste elektrisch gesteuerte Kupplung (1-4) zu trennen ist;
Entkoppeln, durch die erste elektrisch gesteuerte Kupplung (1-4), der ersten Lenkvorrichtung (2) von dem Koppler (1) als Reaktion auf die vierte Anweisung;
Koppeln, durch die zweite elektrisch gesteuerte Kupplung (1-5), der zweiten Lenkvorrichtung (3) mit dem Koppler (1) als Reaktion auf die vierte Anweisung; und
Koppeln, durch die dritte elektrisch gesteuerte Kupplung (1-6), des Lenkeingabemechanismus (6) mit dem Koppler (1) als Reaktion auf die vierte Anweisung.

15. Computerlesbares Speichermedium, umfassend ein Programm, wobei, wenn das Programm auf einem Computer ausgeführt wird, der Computer in die Lage versetzt wird, das Verfahren nach einem der Ansprüche 11 bis 14 durchzuführen.

## Revendications

1. Mécanisme de direction, comprenant : un coupleur (1), un mécanisme d'exécution de direction (2, 3), et un mécanisme d'entraînement de direction (4, 5), dans lequel
le mécanisme d'exécution de direction comprend un premier dispositif de direction (2) et un second dispositif de direction (3) ;
le mécanisme d'entraînement de direction comprend un premier moteur (4) et un deuxième moteur (5), dans lequel le premier moteur (4) est relié au premier dispositif de direction (2), le premier dispositif de direction (2) peut être entraîné par le premier moteur (4) pour modifier un angle d'une première roue, le deuxième moteur (5) est relié au second dispositif de direction (3), et le second dispositif de direction (3) peut être entraîné par le deuxième moteur (5) pour modifier un angle d'une deuxième roue ;
le coupleur (1) comprend une première extrémité de sortie et une seconde extrémité de sortie, le premier dispositif de direction (2) est relié à la première extrémité de sortie du coupleur (1), et le second dispositif de direction (3) est relié à la seconde extrémité de sortie du coupleur (1) ; et
le coupleur (1) comprend un premier état de fonctionnement, un deuxième état de fonctionnement, un troisième état de fonctionnement, et un quatrième état de fonctionnement, dans lequel lorsque le coupleur (1) est dans le premier état de fonctionnement, le premier dispositif de direction (2) est couplé avec le coupleur (1), et le second dispositif de direction (3) est couplé avec le coupleur (1) ; lorsque le coupleur (1) est dans le deuxième état de fonctionnement, le premier dispositif de direction (2) est découplé du coupleur (1), et le second dispositif de direction (3) est découplé du coupleur (1) ; lorsque le coupleur (1) est dans le troisième état de fonctionnement, le premier dispositif de direction (2) est couplé avec le coupleur (1), et le second dispositif de direction (3) est découplé du coupleur (1) ; ou lorsque le coupleur (1) est dans le quatrième état de fonctionnement, le premier dispositif de direction (2) est découplé du coupleur (1), et le second dispositif de direction (3) est couplé avec le coupleur (1).

2. Mécanisme de direction selon la revendication 1, dans lequel le coupleur (1) comprend : un premier engrenage (1-1), un deuxième engrenage (1-2), un troisième engrenage (1-3), un premier embrayage à commande électrique (1-4), et un deuxième embrayage à commande électrique (1-5), dans lequel
le premier engrenage (1-1) est en prise avec le deuxième engrenage (1-2) par l'intermédiaire du troisième engrenage (1-3) ;
le premier embrayage à commande électrique (1-4) comprend une première extrémité d'entrée (1-4a) et une première extrémité de sortie (1-4b), et le premier engrenage (1-1) est relié à la première extrémité d'entrée (1-4a) du premier embrayage à commande électrique (1-4) ;
le deuxième embrayage à commande électrique (1-5) comprend une deuxième extrémité d'entrée (1-5a) et une deuxième extrémité de sortie (1-5b), et le deuxième engrenage (1-2) est relié à la deuxième extrémité d'entrée (1-5a) du deuxième embrayage à commande électrique (1-5) ;
le premier embrayage à commande électrique (1-4) comprend un cinquième état de fonctionnement et un sixième état de fonctionnement, et lorsque le premier embrayage à commande électrique (1-4) est dans le cinquième état de fonctionnement, la première extrémité de sortie (1-4b) du premier embrayage à commande électrique (1-4) est couplée avec la première extrémité d'entrée (1-4a), ou lorsque le premier embrayage à commande électrique (1-4) est dans le sixième état de fonctionnement, la première extrémité de sortie (1-4b) du premier embrayage à commande électrique (1-4) est découplée de la première extrémité d'entrée (1-4a) ; et
le deuxième embrayage à commande électrique (1-5) comprend un septième état de fonctionnement et un huitième état de fonctionnement, et lorsque le deuxième embrayage à commande électrique (1-5) est dans le septième état de fonctionnement, la deuxième extrémité de sortie (1-5b) du deuxième embrayage à commande électrique (1-5) est couplée avec la deuxième extrémité d'entrée (1-5a), ou lorsque le deuxième embrayage à commande électrique (1-5) est dans le huitième état de fonctionnement, la deuxième extrémité de sortie (1-5b) du deuxième embrayage à commande électrique (1-5) est découplée de la deuxième extrémité d'entrée (1-5a).

3. Mécanisme de direction selon la revendication 2, dans lequel le troisième engrenage (1-3) est une couronne (1-3), la couronne (1-3) est en prise interne avec le premier engrenage (1-1), la couronne (1-3) est en prise interne avec le deuxième engrenage (1-2), et le premier engrenage (1-1) est couplé avec le deuxième engrenage (1-2) par l'intermédiaire de la couronne (1-3).

4. Mécanisme de direction selon la revendication 2, dans lequel le troisième engrenage (1-3) est un engrenage intermédiaire (1-7), l'engrenage intermédiaire (1-7) est en prise externe avec le premier engrenage (1-1), l'engrenage intermédiaire (1-7) est en prise externe avec le deuxième engrenage (1-2), et le premier engrenage (1-1) est couplé avec le deuxième engrenage (1-2) par l'intermédiaire de l'engrenage intermédiaire (1-7).

5. Mécanisme de direction selon l'une quelconque des revendications 1 à 4, comprenant également un mécanisme d'entrée de direction (6), dans lequel le mécanisme d'entrée de direction (6) comprend un volant (6-1).

6. Mécanisme de direction selon la revendication 5, dans lequel le mécanisme d'entrée de direction (6) comprend également un troisième moteur (6-2), et le troisième moteur (6-2) est couplé avec le volant (6-1).

7. Mécanisme de direction selon la revendication 5 ou 6, comprenant également un troisième embrayage à commande électrique (1-6), dans lequel
le troisième embrayage à commande électrique (1-6) comprend une troisième extrémité d'entrée (1-6a) et une troisième extrémité de sortie (1-6b) ;
le mécanisme d'entrée de direction est relié à la troisième extrémité d'entrée (1-6a) du troisième embrayage à commande électrique (1-6) ;
le troisième engrenage (1-3) est relié à la troisième extrémité de sortie (1-6b) du troisième embrayage à commande électrique (1-6) ; et
le troisième embrayage à commande électrique (1-6) comprend un neuvième état de fonctionnement et un dixième état de fonctionnement, et lorsque le troisième embrayage à commande électrique (1-6) est dans le neuvième état de fonctionnement, la troisième extrémité de sortie (1-6b) du troisième embrayage à commande électrique (1-6) est couplée avec la troisième extrémité d'entrée (1-6a), ou lorsque le troisième embrayage à commande électrique (1-6) est dans le dixième état de fonctionnement, la troisième extrémité de sortie (1-6b) du troisième embrayage à commande électrique (1-6) est découplée de la troisième extrémité d'entrée (1-6a).

8. Mécanisme de direction selon l'une quelconque des revendications 1 à 7, dans lequel
un premier mécanisme de décélération est également compris entre le premier moteur (4) et le premier dispositif de direction (2) ; et
un second mécanisme de décélération est également compris entre le deuxième moteur (5) et le second dispositif de direction (3).

9. Mécanisme de direction selon l'une quelconque des revendications 1 à 8, dans lequel
le premier dispositif de direction (2) comprend un premier boîtier de direction (2-1) et une première crémaillère (2-2) ;
le second dispositif de direction (3) comprend un second boîtier de direction (3-1) et une seconde crémaillère (3-2) ;
la première crémaillère (2-2) est en prise avec le premier boîtier de direction (2-1), et la première crémaillère (2-2) peut être entraînée par le premier boîtier de direction (2-1) ;
la seconde crémaillère (3-2) est en prise avec le second boîtier de direction (3-1), et la seconde crémaillère (3-2) peut être entraînée par le second boîtier de direction (3-1) ;
le premier moteur (4) est relié mécaniquement à la première crémaillère (2-2), et la première crémaillère (2-2) peut être entraînée par le premier moteur (4) ; et
le deuxième moteur (5) est relié mécaniquement à la seconde crémaillère (3-2), et la seconde crémaillère (3-2) peut être entraînée par le deuxième moteur (5).

10. Véhicule, comprenant le mécanisme de direction selon l'une quelconque des revendications 1 à 9.

11. Procédé de commande, appliqué à un système de direction, dans lequel
le système de direction comprend le mécanisme de direction selon l'une quelconque des revendications 1 à 9 ; et
le procédé de commande de direction comprend :
la réception, par une unité de commande, de signaux d'état du premier dispositif de direction et du second dispositif de direction ;
l'envoi, par l'unité de commande, d'une première instruction au premier embrayage à commande électrique (1-4) et au deuxième embrayage à commande électrique (1-5) sur la base d'un premier signal de défaut reçu, dans lequel
la première instruction est utilisée pour ordonner au premier embrayage à commande électrique (1-4) et au deuxième embrayage à commande électrique (1-5) d'être fermés ;
le couplage, par le premier embrayage à commande électrique (1-4), du premier dispositif de direction (2) avec le coupleur (1) en réponse à la première instruction, et
le couplage, par le deuxième embrayage à commande électrique (1-5), du second dispositif de direction (3) avec le coupleur (1) en réponse à la première instruction.

12. Procédé de commande selon la revendication 11, comprenant également :
l'envoi, par l'unité de commande, d'une deuxième instruction au premier embrayage à commande électrique (1-4), au deuxième embrayage à commande électrique (1-5), et au troisième embrayage à commande électrique (1-6) sur la base d'un deuxième signal de défaut reçu, dans lequel
la deuxième instruction est utilisée pour ordonner au premier embrayage à commande électrique (1-4), au deuxième embrayage à commande électrique (1-5), et au troisième embrayage à commande électrique (1-6) d'être fermés ;
le couplage, par le premier embrayage à commande électrique (1-4), du premier dispositif de direction (2) avec le coupleur (1) en réponse à la deuxième instruction ;
le couplage, par le deuxième embrayage à commande électrique (1-5), du premier dispositif de direction (2) avec le coupleur (1) en réponse à la deuxième instruction ; et
le couplage, par le troisième embrayage à commande électrique (1-6), du mécanisme d'entrée de direction (6) avec le coupleur (1) en réponse à la deuxième instruction, dans lequel
le premier dispositif de direction (2) et le second dispositif de direction (3) peuvent être entraînés par le mécanisme d'entrée de direction (6).

13. Procédé de commande selon la revendication 11, comprenant également :
la détection, par l'unité de commande, d'un signal de pression des pneus ;
l'envoi, par l'unité de commande, d'une troisième instruction au premier embrayage à commande électrique (1-4), au deuxième embrayage à commande électrique (1-5), et au troisième embrayage à commande électrique (1-6) sur la base d'un troisième signal de défaut reçu sur la base du signal de pression des pneus, dans lequel
la troisième instruction est utilisée pour ordonner au premier embrayage à commande électrique (1-4) et au troisième embrayage à commande électrique (1-6) d'être fermés, et ordonner au deuxième embrayage à commande électrique (1-5) d'être déconnecté ;
le couplage, par le premier embrayage à commande électrique (1-4), du premier dispositif de direction (2) avec le coupleur (1) en réponse à la troisième instruction ;
le découplage, par le deuxième embrayage à commande électrique (1-5), du second dispositif de direction (3) du coupleur (1) en réponse à la troisième instruction ; et
le couplage, par le troisième embrayage à commande électrique (1-6), du mécanisme d'entrée de direction (6) avec le coupleur (1) en réponse à la troisième instruction.

14. Procédé de commande selon la revendication 11, comprenant également :
la détection, par l'unité de commande, d'un signal de pression des pneus ;
l'envoi, par l'unité de commande, d'une troisième instruction au premier embrayage à commande électrique (1-4), au deuxième embrayage à commande électrique (1-5), et au troisième embrayage à commande électrique (1-6) sur la base d'un quatrième signal de défaut reçu sur la base du signal de pression des pneus, dans lequel
la quatrième instruction est utilisée pour ordonner au deuxième embrayage à commande électrique (1-5) et au troisième embrayage à commande électrique (1-6) d'être fermés, et ordonner au premier embrayage à commande électrique (1-4) d'être déconnecté ;
le découplage, par le premier embrayage à commande électrique (1-4), du premier dispositif de direction (2) du coupleur (1) en réponse à la quatrième instruction ;
le couplage, par le deuxième embrayage à commande électrique (1-5), du second dispositif de direction (3) avec le coupleur (1) en réponse à la quatrième instruction ; et
le couplage, par le troisième embrayage à commande électrique (1-6), du mécanisme d'entrée de direction (6) avec le coupleur (1) en réponse à la quatrième instruction.

15. Support de stockage lisible par ordinateur, comprenant un programme, dans lequel le programme fonctionne sur un ordinateur, l'ordinateur est activé pour réaliser le procédé selon l'une quelconque des revendications 11 à 14.
